# EUROPEAN PATENT SPECIFICATION

(11) **EP 4 250 092 B1**
(45) Date of publication and mention of the grant of the patent: **15.07.2026**
(21) Application number: 23162187.1
(22) Date of filing: 15.03.2023
(51) Int. Cl.: G06F 8/61, G06F 9/451, G06Q 30/0601

(54) **RECOMMENDATION MANAGEMENT APPARATUS, RECOMMENDATION MANAGEMENT METHOD, AND CARRIER MEANS**
EMPFEHLUNGSVERWALTUNGSVORRICHTUNG, EMPFEHLUNGSVERWALTUNGSVERFAHREN UND TRÄGERMITTEL
APPAREIL DE GESTION DE RECOMMANDATIONS, PROCÉDÉ DE GESTION DE RECOMMANDATIONS ET MOYENS DE SUPPORT

(30) Priority: 22.03.2022 JP 2022045061
(43) Date of publication of application: 27.09.2023
(73) Proprietor: Ricoh Company, Ltd., Tokyo 143-8555 (JP)
(72) Inventor: NISHIO, Masahide, Tokyo 143-8555 (JP); TERASAKI, Keisuke, Tokyo 143-8555 (JP)
(74) Representative: Marks & Clerk LLP

(56) References cited:
- US-A1- 2015 363 863
- US-A1- 2017 169 343
- FLORIAN LETTNER ET AL: "Automated and unsupervised user interaction logging as basis for usability evaluation of mobile applications", ADVANCES IN MOBILE COMPUTING & MULTIMEDIA, ACM, 2 PENN PLAZA, SUITE 701 NEW YORK NY 10121-0701 USA, 3 December 2012 (2012-12-03), pages 118 - 127, XP058029749, ISBN: 978-1-4503-1307-0, DOI: 10.1145/2428955.2428983

## Description

### BACKGROUND

### Technical Field

The present disclosure relates to a recommendation management apparatus, a recommendation management method, and carrier means.

### Related Art

In recent years, an online market that provides various applications to smart devices is in use. For example, a user using a smart device can download a desirable application recommended in an online market with a charge or no charge to use the recommended application on the smart device. As described above, there is known a system that recommends a useful application to a user.

For example, a known technology recommends an application based on the tendency of the frequency of use of an application by a plurality of users (for example, see Japanese Unexamined Patent Application Publication No. 2018-190154).

US 2017/169343 discloses a computer-implemented method including accessing, by a computer system, information that describes use of one or more computer-based services by a particular user from one or more computing devices that are associated with the particular user; identifying one or more native applications that are associated with the one or more services, wherein the one or more native applications are configured to be installed and executed by one or more types of mobile computing devices; determining whether to recommend the one or more native applications based on the information and one or more threshold levels of use of the one or more computer-based services; and providing, based on the determining, a recommendation that is associated with the particular user and that identifies at least one of the one or more native applications.

However, when an introduction object is introduced in related art, it is difficult for a user to check a difference relating to a use history of a user device to which the introduction object has been introduced and a transaction history associated with a transaction or the like of the user.

### SUMMARY

The invention is set out in the appended set of claims.

According to the embodiments of the present disclosure as described above, when the introduction object is introduced, the user can check the difference relating to the use history of the user device to which the introduction object has been introduced and the transaction history associated with the transaction or the like of the user.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram relating to history information management on customers, according to an embodiment of the present disclosure;
FIG. 2 is a diagram relating to acquisition of history information before and after introduction of an introduction object, according to an embodiment of the present disclosure;
FIG. 3 is a diagram illustrating an example of a general arrangement of an information processing system, according to an embodiment of the present disclosure;
FIG. 4 is a diagram illustrating an example of hardware configurations of a recommendation management apparatus, a history management server, and an application distribution server, according to an embodiment of the present disclosure;
FIG. 5 is a diagram illustrating an example of hardware configurations of a communication terminal, according to an embodiment of the present disclosure;
FIG. 6 is a diagram illustrating an example of hardware configurations of a user device, according to an embodiment of the present disclosure;
FIG. 7 is a diagram illustrating an example of functional configurations of the information processing system, according to an embodiment of the present disclosure;
FIG. 8 is a diagram illustrating an example of functional configurations of the information processing system, according to an embodiment of the present disclosure;
FIG. 9 is a table presenting an example of a user information management table, according to an embodiment of the present disclosure;
FIG. 10 is a table presenting an example of a device information management table, according to an embodiment of the present disclosure;
FIG. 11 is a table presenting an example of a use history information management table, according to an embodiment of the present disclosure;
FIG. 12 is a table presenting an example of a transaction history information management table, according to an embodiment of the present disclosure;
FIG. 13 is a table presenting an example of a recommendation condition management table, according to an embodiment of the present disclosure;
FIG. 14 is a table presenting an example of an introduction object management table, according to an embodiment of the present disclosure;
FIG. 15 is a table presenting an example of an introduction information management table, according to an embodiment of the present disclosure;
FIG. 16 is a table presenting an example of a use history information management table, according to an embodiment of the present disclosure;
FIG. 17 is a table presenting an example of a transaction history information management table, according to an embodiment of the present disclosure;
FIG. 18 is a sequence diagram illustrating an example of a user authentication process and a device registration process, according to an embodiment of the present disclosure;
FIG. 19 is a view illustrating an example display screen when user authentication is executed in the communication terminal, according to an embodiment of the present disclosure;
FIG. 20 is a view illustrating an example display screen during device registration in the user device, according to an embodiment of the present disclosure;
FIG. 21 is a sequence diagram illustrating an example of a history information acquisition process, according to an embodiment of the present disclosure;
FIG. 22 is a sequence diagram illustrating an example of a recommendation determination process, according to an embodiment of the present disclosure;
FIG. 23 is a flowchart presenting an example of the recommendation determination process, according to an embodiment of the present disclosure;
FIG. 24 is a view illustrating an example display screen for notification of recommendation information, according to an embodiment of the present disclosure;
FIG. 25 is a sequence diagram illustrating an example of a various application acquisition process, according to an embodiment of the present disclosure;
FIG. 26 is a sequence diagram illustrating an example of a difference information calculation process, according to an embodiment of the present disclosure;
FIG. 27 is a flowchart presenting an example of the difference information calculation process, according to an embodiment of the present disclosure;
FIG. 28 is a view illustrating an example display screen for notification of difference information, according to an embodiment of the present disclosure;
FIG. 29 is a view illustrating an example display screen for notification of an analysis result for the difference information, according to an embodiment of the present disclosure;
FIG. 30 is a view illustrating an example display screen for notification of another difference information, according to an embodiment of the present disclosure;
FIG. 31 is a view illustrating an example display screen for notification of an analysis result for the other difference information, according to an embodiment of the present disclosure; and
FIG. 32 is a sequence diagram illustrating an example of processing using a user device according to another embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, embodiments of the present disclosure are described with reference to the drawings. In the description of the drawings, the same elements are denoted by the same reference numerals, and redundant descriptions thereof are omitted.

### Embodiments

### History Information Management on Customers

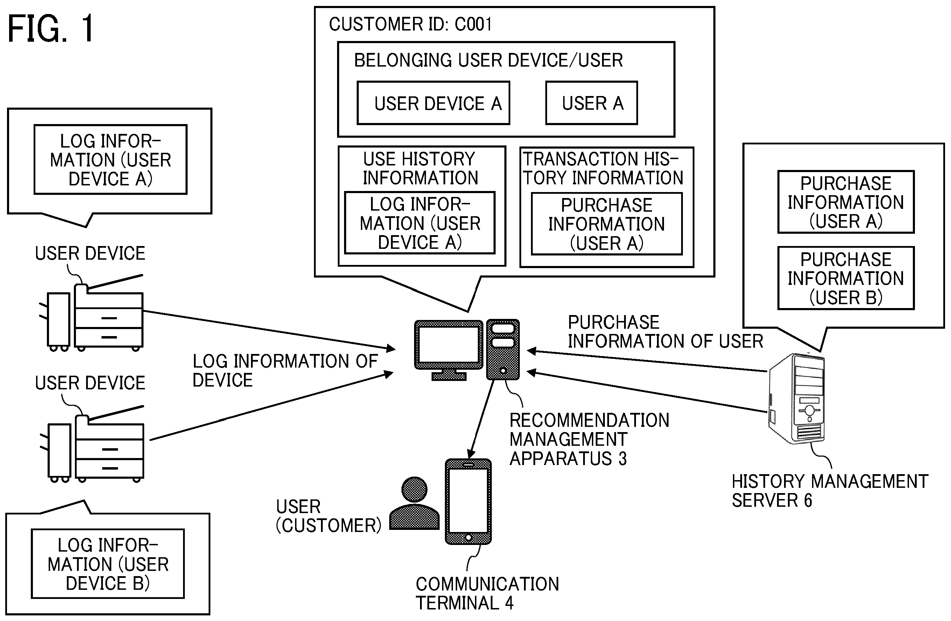

History information management on customers according to an embodiment is described first. FIG. 1 is a diagram relating to history information management on customers. As illustrated in FIG. 1, a recommendation management apparatus 3 manages, per customer identification (ID) (customer identification information), a user device and a user belonging to the customer of the customer ID. In this case, the recommendation management apparatus 3 collects log information from each user device, and associates the log information with the customer ID to which the user device belongs to manage the log information associated with the customer ID as use history information. Further, the recommendation management apparatus 3 collects purchase information from a history management server 6 that manages purchase information and so forth of each user, and associates the purchase information with the customer ID to which the user belongs to manage the purchase information associated with the customer ID as transaction history information. Then, the recommendation management apparatus 3 specifies an introduction object based on the use history information and the transaction history information, and recommends introduction of the specified introduction object to the customer. For example, the recommendation management apparatus 3 transmits a recommendation notification for an introduction object to a desirable destination so that an administrative user who manages a user device 5 can check recommendation information, and manages whether the introduction object is introduced based on the recommendation notification. Then, the recommendation management apparatus 3 manages the customer ID and the installed introduction object in association with each other.

### Acquisition of History Information Before and After Introduction of Introduction Object

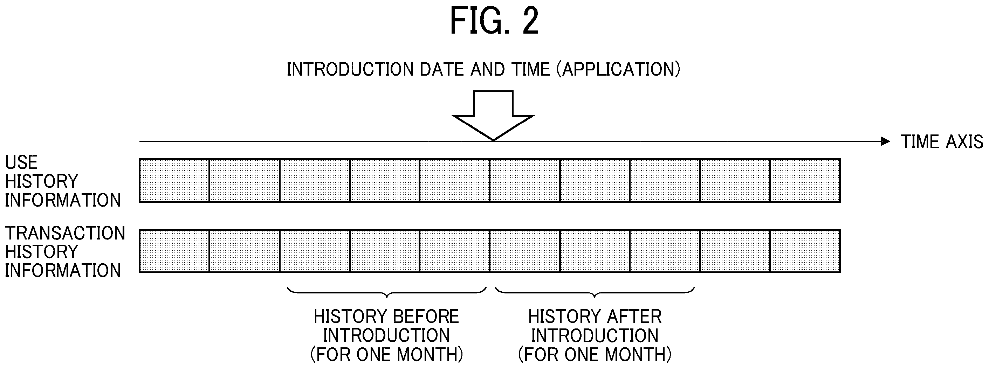

Calculation of difference information between history information before introduction of an introduction object and history information after the introduction of the introduction object is described next. FIG. 2 is a diagram relating to calculation of difference information between history information before introduction of an introduction object and history information after the introduction of the introduction object. Referring to FIG. 2, the recommendation management apparatus 3 calculates difference information between history information before and after introduction of a predetermined introduction object by a method as follows. For example, the recommendation management apparatus 3 stores an application ID of an installed application, a customer ID, and an introduction date and time in association with each other. Then, for example, after one month has elapsed, the recommendation management apparatus 3:
- extracts a recommendation condition based on the application ID;
- extracts histories corresponding to the recommendation condition from use history information and transaction history information corresponding to the customer ID; and
- calculates a difference between the histories extracted from the use history information before and after the introduction date and time, and a difference between the histories extracted from the transaction history information before and after the introduction date and time.

Specifically, the recommendation management apparatus 3:
- aggregates the use history information and the transaction history information before the introduction (for example, for one month);
- aggregates the use history information and the transaction history information after the introduction (for example, for one month); and
- calculates difference information* (including amount of change or ratio) between the use history information and the transaction history information before the introduction and the use history information and the transaction history information after the introduction.
* refers to, for example, an amount of change for one month or difference information for each day in one month.

In the present embodiment, a recommendation management system that provides difference information calculated based on the method as described above to an administrative user is constructed.

### General Arrangement of Information Processing System

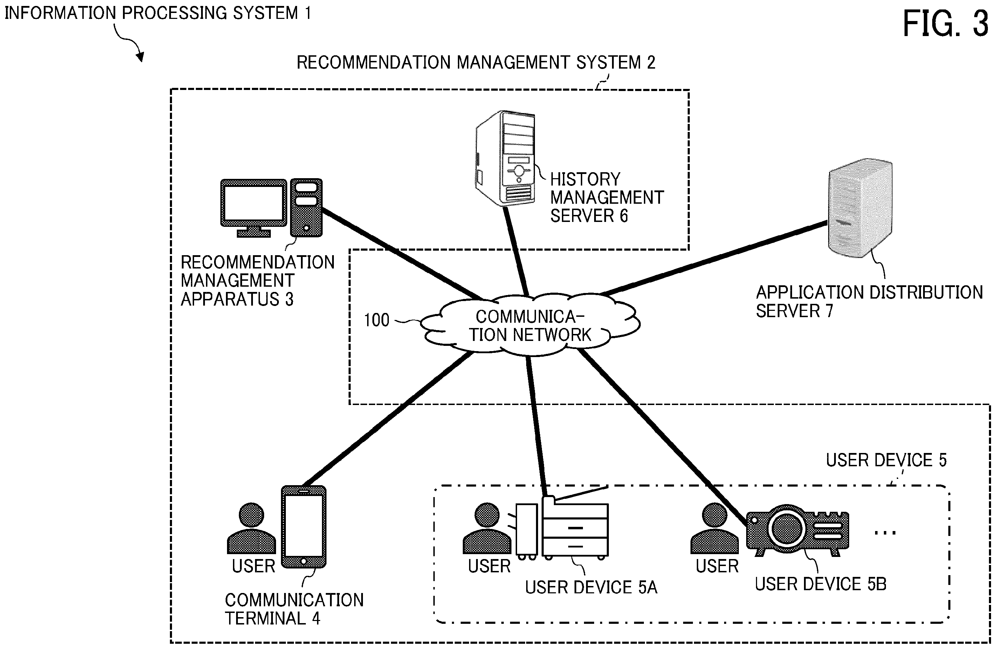

FIG. 3 is a diagram illustrating an example of a general arrangement of an information processing system 1. As illustrated in FIG. 3, the information processing system 1 includes apparatuses and terminals including a recommendation management apparatus 3, a communication terminal 4, a user device 5, a history management server 6, and an application distribution server 7. The information processing system 1 includes a recommendation management system 2 including the recommendation management apparatus 3, the communication terminal 4, the user device 5, and the history management server 6. In the information processing system 1, the recommendation management apparatus 3, the communication terminal 4, the user device 5, the history management server 6, and the application distribution server 7 are connected to each other via a communication network 100. When the recommendation management apparatus 3 communicates with each of the communication terminal 4, the user device 5, and the history management server 6 via the communication network 100, communication may be performed via a fire wall inside the communication network 100.

The above-described communication network 100 is a communication network through which an unspecified large number of communications are performed, and is constructed by, for example, the Internet, an intranet, or a local area network (LAN). The communication network 100 may include, in addition to a wired communication, a wireless communication in compliance with, for example, 4th Generation (4G), 5th Generation (5G), Worldwide Interoperability for Microwave Access (WiMAX), and Long Term Evolution (LTE).

### Recommendation Management Apparatus

The recommendation management apparatus 3 included in the information processing system 1 is an information processing apparatus (computer system) that recommends an introduction object to a customer. The recommendation management apparatus 3 is implemented by at least one information processing apparatus (computer system) with a general-purpose server operating system (OS) or the like installed therein, and manages history information relating to an introduction object including an application recommended to be used. The history information is, for example, use history information indicating a use history when a function of the user device 5 is used. The recommendation management apparatus 3 performs a recommendation determination process (described later) based on the history information. The recommendation management apparatus 3 may have an installation management function of managing installation of an application. The recommendation management apparatus 3 stores, in storage means, a communication application for performing communication with another apparatus or a communication terminal. The recommendation management apparatus 3 may manage the use history of the introduction object in cooperation with another management server that manages the use history. That is, the recommendation management apparatus 3 may manage history information (log information) as the use history and information for recommending introduction of the introduction object in a separate manner.

The recommendation management apparatus 3 may be a communication terminal having a communication function, such as a typically used personal computer (PC), portable notebook PC, mobile phone, smartphone, or tablet terminal. The recommendation management apparatus 3 may use a communication apparatus or a communication terminal that can operate software such as browser software. The recommendation management apparatus 3 may be implemented by a plurality of computers.

The recommendation management apparatus 3 may make a notification (transmission) to the communication terminal 4 or the user device 5 (described later) of data (information) by push notification (transmission), such as a recommendation information notification that is a result of the recommendation determination process. In this case, the recommendation management apparatus 3 can implement a notification (transmission) of data by push notification using Firebase Cloud Messaging (FCM), which is an example of a push notification server.

### Communication Terminal

The communication terminal 4 is a communication terminal that is used by a user who uses or manages the user device 5 (described later). The communication terminal 4 is implemented by an information processing apparatus (computer system) with a general-purpose OS or the like installed therein for performing communication. The communication terminal 4 also receives and displays a recommendation notification transmitted by the recommendation management apparatus 3 and difference information between history information before introduction of an introduction object and history information after the introduction of the introduction object. The communication terminal 4 stores, in storage means, a communication application for performing communication with another apparatus or application that provides an external service that is typically used or the communication terminal 4.

The communication terminal 4 may be a communication terminal having a communication function, such as a typically used PC, portable notebook PC, mobile phone, smartphone, tablet terminal, or wearable terminal of sunglasses type or wristwatch type, for example. The communication terminal 4 may use a communication apparatus or a communication terminal that can operate browser software or software of various applications.

### User Device

The user device 5 is a device that is managed by the recommendation management apparatus 3 in association with a customer ID. The user device 5 is, for example, a device (apparatus) that is implemented by an information processing apparatus (computer system) with a general-purpose OS or the like installed therein for performing communication, and that provides history information relating to an introduction object, such as an application recommended to be used. The user device 5 introduces (installs) and uses a recommended introduction object (application or the like). When a function of the user device 5 is used, the user device 5 stores log information as an example of a use history and uploads the log information to the recommendation management apparatus 3. In this case as illustrated in FIG. 3, a user device 5A is a multifunction peripheral (MFP), an example of which is an image forming apparatus.

A user device 5B is a projector that projects a desirable image, video, or the like on a screen or the like. In the present embodiment, unless otherwise specified, the user device 5A or 5B is simply referred to as a user device 5. The user device 5 includes at least one of a scanner, a facsimile apparatus, an electronic whiteboard, a PC, a smartphone, and an interactive voice operation apparatus (smart speaker or artificial intelligence (AI) speaker). The user device 5 stores, in storage means, a communication application for performing communication with another apparatus or application that provides an external service that is typically used, or each apparatus or terminal via the communication network 100.

The user device 5 may be constructed by a computer, such as a typically used desktop PC or portable notebook PC.

### History Management Server

The history management server 6 is an information processing apparatus (computer system) that manages history information. The history management server 6 is implemented by at least one information processing apparatus (computer system) with a general-purpose server OS or the like installed therein. The history management server 6 manages items of history information including contract history information indicating a contract history relating to a contract, purchase history information indicating a purchase history, and research history information indicating a research history of the user device 5 in association with the user device 5 or the customer. The above-described history information, that is, transaction history information is history information different from the use history information managed by the recommendation management apparatus 3. Specifically, the transaction history information includes purchase history information representing a purchase history relating to a purchase of the user device 5, contract history information representing a contract history relating to a contract of the user device 5, and research history information representing a research history relating to a research on the user device 5. The history management server 6 stores a communication application for performing communication with another apparatus or a communication terminal in storage means.

The history management server 6 may be constructed by a computer, such as a typically used PC or portable notebook PC, or may be constructed by a plurality of computers in which respective units (functions or means) such as a storage are divided and desirably assigned. All or part of the functions of the history management server 6 may be provided by a server computer present in a cloud environment or a server computer present in an on-premise environment. That is, the recommendation management system 2 according to the present embodiment may be constructed such that the recommendation management apparatus 3 manages the information (data) managed by the history management server 6. The history management server 6 may use a communication apparatus or a communication terminal that can operate software such as browser software.

### Application Distribution Server

The application distribution server 7 is an information processing apparatus (computer system) that provides a service to the user device 5 or the user. The application distribution server 7 is implemented by at least one information processing apparatus (computer system) with a general-purpose server OS or the like installed therein.

The application distribution server 7 stores various applications distributed or introduced to the user device 5 in a predetermined storage area and manages the applications. The application distribution server 7 can further perform authentication in response to a predetermined processing request requested by the user device 5 and execution of the predetermined processing. The processing or process includes, for example, providing application data to the user device 5, providing an application function to the user device 5, and further providing a service to the user device 5 or the user. The application distribution server 7 stores a communication application for performing communication with another apparatus or a communication terminal in storage means.

The application distribution server 7 may be constructed by a computer, such as a typically used PC or portable notebook PC, or may be constructed by a plurality of computers in which respective units (functions or means) such as a storage are divided and desirably assigned. All or part of the functions of the application distribution server 7 may be provided by a server computer present in a cloud environment or a server computer present in an on-premise environment. The application distribution server 7 may use a communication apparatus or a communication terminal that can operate software such as browser software.

Based on the above-described system configuration, in the present embodiment, an introduction effect relating to an introduction object recommended to be used is provided to a user, thereby providing a recommendation management system 2 that enables the user to easily recognize the introduction effect.

### Terms

In the present embodiment, "recommendation" represents recommending a customer to introduce an introduction object.

Examples of the recommendation include recommendation for introducing an introduction object such as an application program (hereinafter, referred to as application) to the user device 5 or the like.

In the present embodiment, an "introduction object" is an object to be introduced. Examples of the introduction object include an application to be introduced (installed) to the user device 5 or the like, a contract action by the user or a contract content relating to a contract of the user device 5, a purchase procedure for a purchase, and a research action such as a research.

In the present embodiment, "introduction" refers to making an introduction object available. When the introduction object is software such as an application, examples of the introduction include making software available by installation or the like in the user device 5, the communication terminal 4, or the like; purchasing a license; and making an application function available from an external server such as the application distribution server 7. When the introduction object is hardware or a product of such as a peripheral device or an apparatus, the introduction includes installing hardware or making hardware available, and purchasing. When the introduction object is a service, the introduction includes a contract and a sign-up for the service.

In the present embodiment, an "introduction effect" includes difference information indicating a difference between pre-introduction history information before introduction of a predetermined introduction object and post-introduction history information after the introduction of the predetermined introduction object, and an expression in which a notification comment relating to the difference information is visually indicated.

In the present embodiment, a "user" is a person who is managed in the recommendation management apparatus 3 in association with a customer ID. The user refers to, for example, a person who views and handles various notifications transmitted by the recommendation management apparatus 3 using a communication terminal. The user also refers to a person who operates the user device 5 to use a predetermined function, or a person who performs a transaction or a procedure such as a purchase or a contract via a communication terminal. The user includes a general user and an administrative user. In this case, the general user is a person who uses the user device 5. The administrative user is a person who manages or owns the user device 5. For example, the administrative user can introduce an introduction object to the user device 5 based on a recommendation information notification. The user includes a department, an organization, a group, a team, and a mass of such as a company in addition to an individual.

In the present embodiment, a "customer" is a contractor who uses a service provided by the information processing system 1. The recommendation management apparatus 3 manages the customer using a customer ID. The customer includes, for example, an entity to which a user and a user device belong, or an account relating to the entity. The customer includes, for example, a department, an organization, a group, a team, and a mass of a company. However, the customer may indicate an individual such as a user. A user or a user device 5 belonging to the customer may be referred to as the customer.

In the present embodiment, a "service" is a function that is provided by the information processing system 1. Examples of the service include providing application data or an application function, and recommending an introduction object.

### Hardware Configurations

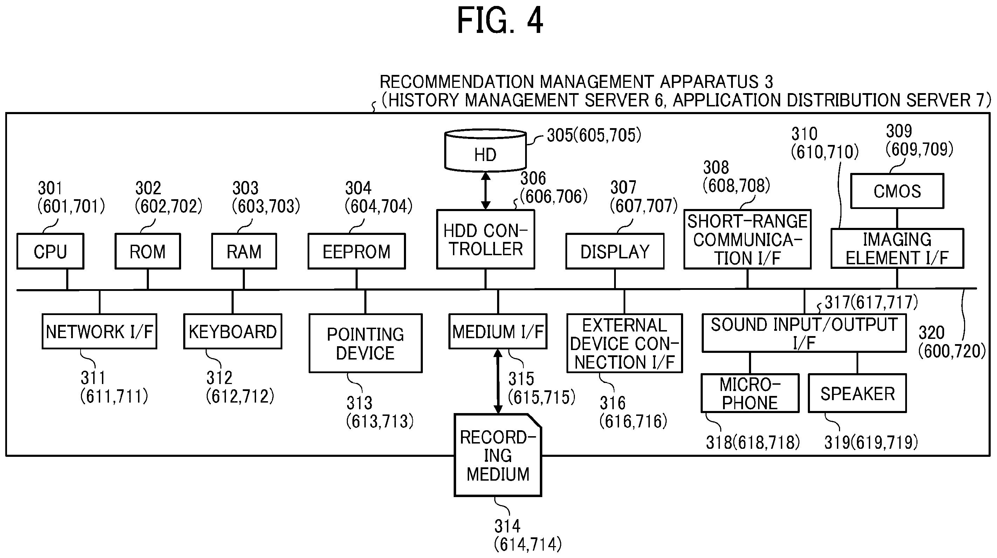

Hardware configurations of apparatuses or terminals included in the information processing system 1 according to the embodiment are described with reference to FIGs. 4 to 6. An element may be added to or omitted from the hardware configurations of the terminals or the apparatuses illustrated in FIGs. 4 to 6 as desired.

### Hardware Configurations of Recommendation Management Apparatus, History Management Server, and Application Distribution Server

FIG. 4 illustrates an example of hardware configurations of the recommendation management apparatus 3, the history management server 6, and the application distribution server 7. As illustrated in FIG. 4, the recommendation management apparatus 3 is constructed by, for example, a computer, and includes a central processing unit (CPU) 301, a read-only memory (ROM) 302, a random-access memory (RAM) 303, an electrically erasable programmable ROM (EEPROM) 304, a hard disk (HD) 305, a hard disk drive (HDD) controller 306, a display 307, a short-range communication interface (I/F) 308, a complementary metal-oxide semiconductor (CMOS) sensor 309, and an imaging element I/F 310. The recommendation management apparatus 3 further includes a network I/F 311, a keyboard 312, a pointing device 313, a medium I/F 315, an external device connection I/F 316, a sound input/output I/F 317, a microphone 318, a speaker 319, and a bus line 320.

Among these components, the CPU 301 controls entire operation of the recommendation management apparatus 3. The ROM 302 stores, for example, a program for driving the CPU 301. The RAM 303 is used as a work area for the CPU 301. The EEPROM 304 reads or writes various data such as an application under control of the CPU 301. The HD 305 stores various data such as a program. The HDD controller 306 controls reading or writing of various data from or to the HD 305 under control of the CPU 301. In this case, the recommendation management apparatus 3 may have a hardware configuration equipped with a solid state drive (SSD) instead of the HD 305 and the HDD controller 306. The display 307 displays various items of information such as a cursor, a menu, a window, a character, or an image. In the present embodiment, the display 307 functions as an example of displaying means. The short-range communication I/F 308 is a communication circuit for performing data communication with, for example, a communication apparatus or a communication terminal including a wireless communication interface, of such as near field communication (NFC), Bluetooth^{®}, or Wi-Fi^{®}. The CMOS sensor 309 is an example of built-in imaging means that captures a subject under control of the CPU 301 to obtain image data or video data. Imaging means including a charge-coupled device (CCD) sensor instead of the CMOS sensor may be used as the imaging means. The imaging element I/F 310 is a circuit that controls driving of the CMOS sensor 309.

The network I/F 311 is an interface for data communication using the communication network 100. The keyboard 312 is an example of input means provided with a plurality of keys for allowing a user to input characters, numerals, or various instructions. Instead of or in addition to the keyboard 312, input means including a touch panel for inputting characters, numerals, or various instructions may be provided. The pointing device 313 is an example of input means that allows a user to select or execute a specific instruction, select a processing object, or move a cursor being displayed. The medium I/F 315 controls reading or writing (storing) of data from or to a recording medium 314 such as a flash memory. The external device connection I/F 316 is an interface for connecting the recommendation management apparatus 3 to various external devices. Examples of the external devices include, but not limited to, a Universal Serial Bus (USB) memory. The sound input/output I/F 317 is a circuit for inputting or outputting a sound signal to the microphone 318 or from the speaker 319 under control of the CPU 301. The microphone 318 is a built-in circuit that converts sound into an electric signal. The microphone 318 acquires voice or sound waves emitted from an external speaker, etc., and acquires information using electric signals. The speaker 319 is a built-in circuit that generates sound such as music or voice by converting an electric signal into physical vibration. The bus line 320 is, for example, an address bus or a data bus that electrically connects the elements such as the CPU 301.

The history management server 6 is constructed by, for example, a computer, and includes a CPU 601, a ROM 602, a RAM 603, an EEPROM 604, a HD 605, an HDD controller 606, a display 607, a short-range communication I/F 608, a CMOS sensor 609, and an imaging element I/F 610. These hardware resources are similar to the hardware resources of the CPU 301, the ROM 302, the RAM 303, the EEPROM 304, the HD 305, the HDD controller 306, the display 307, the short-range communication I/F 308, the CMOS sensor 309, and the imaging element I/F 310 of the recommendation management apparatus 3, and hence the description thereof is omitted. The history management server 6 further includes a network I/F 611, a keyboard 612, a pointing device 613, a medium I/F 615, an external device connection I/F 616, a sound input/output I/F 617, a microphone 618, a speaker 619, and a bus line 600. These hardware resources are similar to the hardware resources of the network I/F 311, the keyboard 312, the pointing devices 313, the medium I/F 315, the external device connection I/F 316, the sound input/output I/F 317, the microphone 318, the speaker 319, and the bus line 320 of the recommendation management apparatus 3, and hence the description is omitted. Also, a recording medium 614 is equivalent to the recording medium 314, and hence the description is omitted.

The application distribution server 7 is constructed by, for example, a computer, and includes a CPU 701, a ROM 702, a RAM 703, an EEPROM 704, a HD 705, an HDD controller 706, a display 707, a short-range communication I/F 708, a CMOS sensor 709, and an imaging element I/F 710. These hardware resources are similar to the hardware resources of the CPU 301, the ROM 302, the RAM 303, the EEPROM 304, the HD 305, the HDD controller 306, the display 307, the short-range communication I/F 308, the CMOS sensor 309, and the imaging element I/F 310 of the recommendation management apparatus 3, and hence the description thereof is omitted. The application distribution server 7 further includes a network I/F 711, a keyboard 712, a pointing device 713, a medium I/F 715, an external device connection I/F 716, a sound input/output I/F 717, a microphone 718, a speaker 719, and a bus line 720. These hardware resources are similar to the hardware resources of the network I/F 311, the keyboard 312, the pointing devices 313, the medium I/F 315, the external device connection I/F 316, the sound input/output I/F 317, the microphone 318, the speaker 319, and the bus line 320 of the recommendation management apparatus 3, and hence the description is omitted. Also, a recording medium 714 is equivalent to the recording medium 314, and hence the description is omitted. The application distribution server 7 may use an external server that is connected via the communication network 100 and is typically used. In this case, the hardware resources may comply with the hardware specification of the external server.

### Hardware Configurations of Communication Terminal

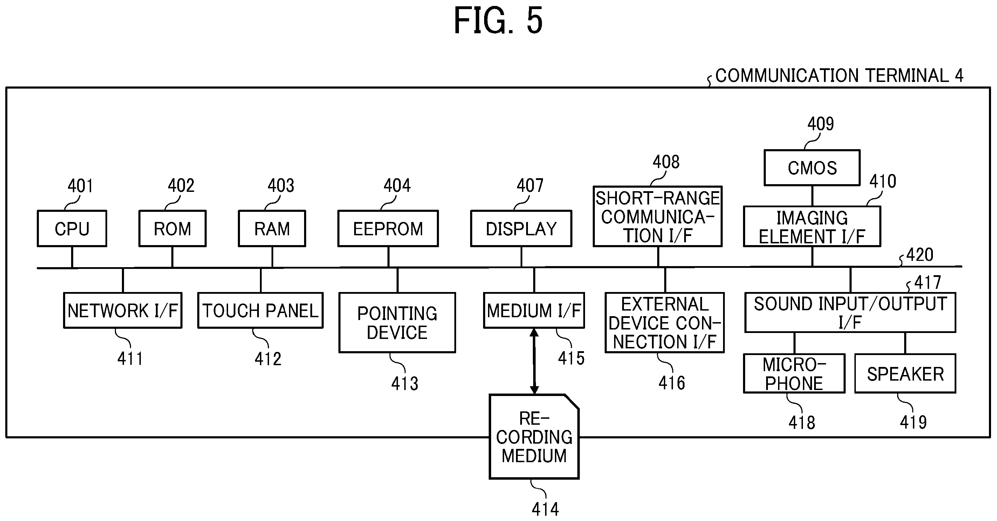

FIG. 5 is a diagram illustrating an example of hardware configurations of the communication terminal 4. As illustrated in FIG. 5, the communication terminal 4 is constructed by, for example, a computer, and includes a CPU 401, a ROM 402, a RAM 403, an EEPROM 404, a display 407, a short-range communication I/F 408, a CMOS sensor 409, and an imaging element I/F 410. The communication terminal 4 further includes a network I/F 411, a touch panel 412, a pointing device 413, a medium I/F 415, an external device connection I/F 416, a sound input/output I/F 417, a microphone 418, a speaker 419, and a bus line 420.

Among these components, the CPU 401 controls entire operation of the communication terminal 4. The ROM 402 stores, for example, a program for driving the CPU 401. The RAM 403 is used as a work area for the CPU 401. The EEPROM 404 reads or writes various data such as an application under control of the CPU 401. The display 407 displays various items of information such as a cursor, a menu, a window, a character, or an image. In the present embodiment, the display 407 functions as an example of displaying means. The short-range communication I/F 408 is a communication circuit for performing data communication with, for example, a communication apparatus or a communication terminal including a wireless communication interface, of such as NFC, Bluetooth^{®}, or Wi-Fi^{®}. The CMOS sensor 409 is an example of built-in imaging means that captures a subject under control of the CPU 401 to obtain image data or video data. Imaging means including a CCD sensor instead of the CMOS sensor may be used as the imaging means. The imaging element I/F 410 is a circuit that controls driving of the CMOS sensor 409.

The network I/F 411 is an interface for data communication using the communication network 100. The touch panel 412 is an example of input means that allows a user to operate the communication terminal 4 by pressing, clicking, or tapping a certain button, icon, or the like disposed on the display 407. Instead of or in addition to the touch panel 412, input means including a keyboard for inputting characters, numerals, or various instructions may be provided. The pointing device 413 is an example of input means that allows a user to select or execute a specific instruction, select a processing object, or move a cursor being displayed. The medium I/F 415 controls reading or writing (storing) of data from or to a recording medium 414 such as a flash memory. The external device connection I/F 416 is an interface for connecting the communication terminal 4 to various external devices. Examples of the external devices include, but not limited to, a USB memory. The sound input/output I/F 417 is a circuit for inputting or outputting a sound signal to the microphone 418 or from the speaker 419 under control of the CPU 401. The microphone 418 is a built-in circuit that converts sound into an electric signal. The microphone 418 acquires voice or sound waves emitted from an external speaker, etc., and acquires information using electric signals. The speaker 419 is a built-in circuit that generates sound such as music or voice by converting an electric signal into physical vibration. The bus line 420 is, for example, an address bus or a data bus that electrically connects the elements such as the CPU 401. Hardware Configurations of User Device

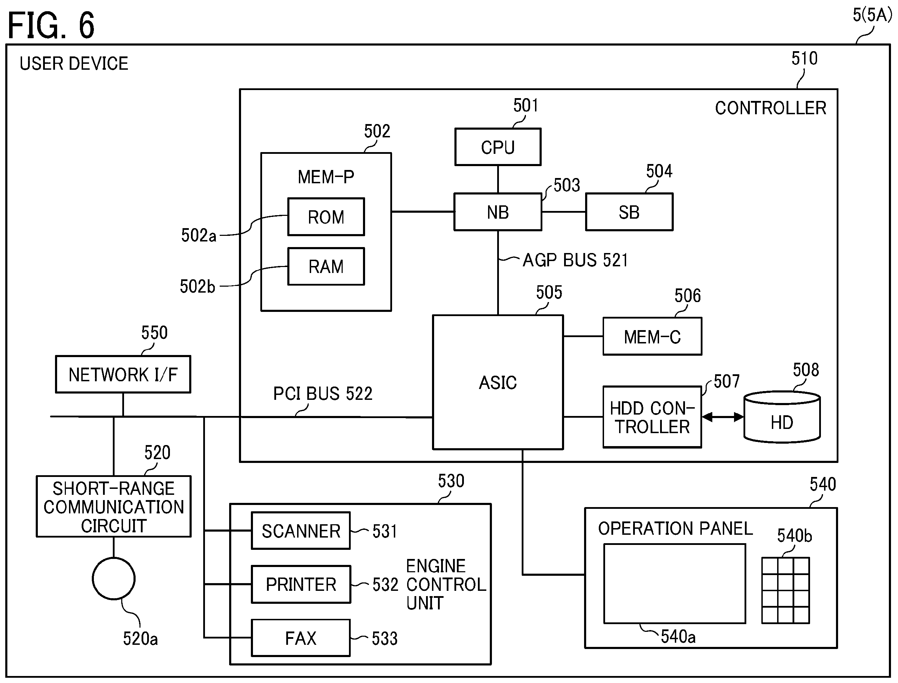

FIG. 6 illustrates an example of hardware configurations of the user device 5. As illustrated in FIG. 6, the user device 5 is, for example, an image forming apparatus (MFP), and includes hardware resources including a controller 510, a short-range communication circuit 520, an engine control unit 530, an operation panel 540, and a network I/F 550.

Among these components, the controller 510 includes a CPU 501 that is a main part of a computer, a system memory (MEM-P) 502, a northbridge (NB) 503, a southbridge (SB) 504, an application specific integrated circuit (ASIC) 505, a local memory (MEM-C) 506 serving as a memory, a HDD controller 507, and a HD 508 serving as a memory. The NB 503 and the ASIC 505 are connected to each other via an accelerated graphics port (AGP) bus 521.

Among these components, the CPU 501 is a control unit that performs overall control of the user device 5. The NB 503 connects the CPU 501 with the MEM-P 502, the SB 504, and the AGP bus 521. The NB 503 includes a memory controller for controlling reading or writing of various data from or to the MEM-P 502, a Peripheral Component Interconnect (PCI) master, and an AGP target.

The MEM-P 502 includes a ROM 502a as a memory that stores a program and data for implementing various functions of the controller 510. The MEM-P 502 further includes a RAM 502b as a memory that develops the program and data, or as a drawing memory that stores drawing data for printing. The program stored in the RAM 502b may be stored in any computer-readable recording medium, such as a compact-disk read-only memory (CD-ROM), a compact-disk recordable (CD-R), or a digital versatile disk (DVD), in a file format installable or executable by a computer, for distribution.

The SB 504 is a bridge to connect the NB 503 to a PCI device and a peripheral device. The ASIC 505 is an integrated circuit (IC) having a hardware element for image processing and dedicated to an image processing use, and serves as a bridge that connects the AGP bus 521, a PCI bus 522, the HD 508, and the MEM-C 506 to each other. The ASIC 505 includes a PCI target and an AGP master, an arbiter (ARB) that arbitrates the driving timing of each signal in accordance with a predetermined order of precedence in the ASIC 505, a memory controller that controls the MEM-C 506, a plurality of direct memory access controllers (DMACs) that rotate image data using a hardware logic or the like, and a PCI unit that transfers data to or from a scanner 531 or a printer 532 via the PCI bus 522. A USB interface or an Institute of Electrical and Electronics Engineers 1394 (IEEE 1394) interface may be connected to the ASIC 505.

The MEM-C 506 is a local memory used as a copy image buffer or a code buffer. The HD 508 is a storage for accumulating image data, font data used in printing, and forms. The HD 508 controls reading or writing of various data from or to the HD 508 under control by the CPU 501. The AGP bus 521 is a bus interface for a graphics accelerator card, which has been proposed to accelerate graphics processing. Through directly accessing the MEM-P 502 by high-throughput, speed of the graphics accelerator card can be increased.

The short-range communication circuit 520 is provided with an antenna 520a for a short-range communication circuit. The short-range communication circuit 520 is a communication circuit of NFC, Bluetooth^{®}, or the like.

The engine control unit 530 includes the scanner 531, the printer 532, and a fax 533. The operation panel 540 includes a panel display 540a and an operation button section 540b. The panel display 540a is implemented by, for example, a touch panel that displays current set values or a selection screen to accept an input from an operator. The operation button section 540b includes a numeric keypad that accepts set values of various image forming parameters such as image density parameter and a start key that accepts an instruction for starting copying. In the present embodiment, the panel display 540a functions as an example of displaying means. The controller 510 controls the entire user device 5, and controls, for example, drawing, communication, and input from the operation panel 540. The scanner 531 or the printer 532 includes an image processing section that performs various image processing, such as error diffusion or gamma (γ) conversion. The fax 533 also includes an analog I/F, a modem, and a speaker for performing facsimile communication using an analog line (public line) that connects the fax 533 to an external apparatus having a facsimile communication function.

The user device 5 can sequentially switch to select a document server function, a copy function, a printer function, and a facsimile function by an application switching key of the operation panel 540. When the document server function is selected, a document server mode is set, when the copy function is selected, a copy mode is set, when the printer function is selected, a printer mode is set, and when the facsimile mode is selected, a facsimile mode is set.

The network I/F 550 is an interface for data communication using the communication network 100. The short-range communication circuit 520 and the network I/F 550 are electrically connected to the ASIC 505 through the PCI bus 522.

The user device 5 may be constructed by a computer and include hardware resources as illustrated in FIG. 4.

The above-described programs may be stored in any computer-readable recording medium in a file format installable or executable by the computer, or can be downloaded and distributed via a network. Examples of the recording medium include a CD-R, a DVD, a Blu-ray^{®} disc, a secure digital (SD) card, and a USB memory. In addition, such a recording medium may be provided in the form of a program product to users within a certain country or outside that country. For example, the recommendation management apparatus 3 executes a program according to an embodiment of the disclosure to implement a recommendation management method according to an embodiment of the disclosure.

### Functional Configurations of Information Processing System

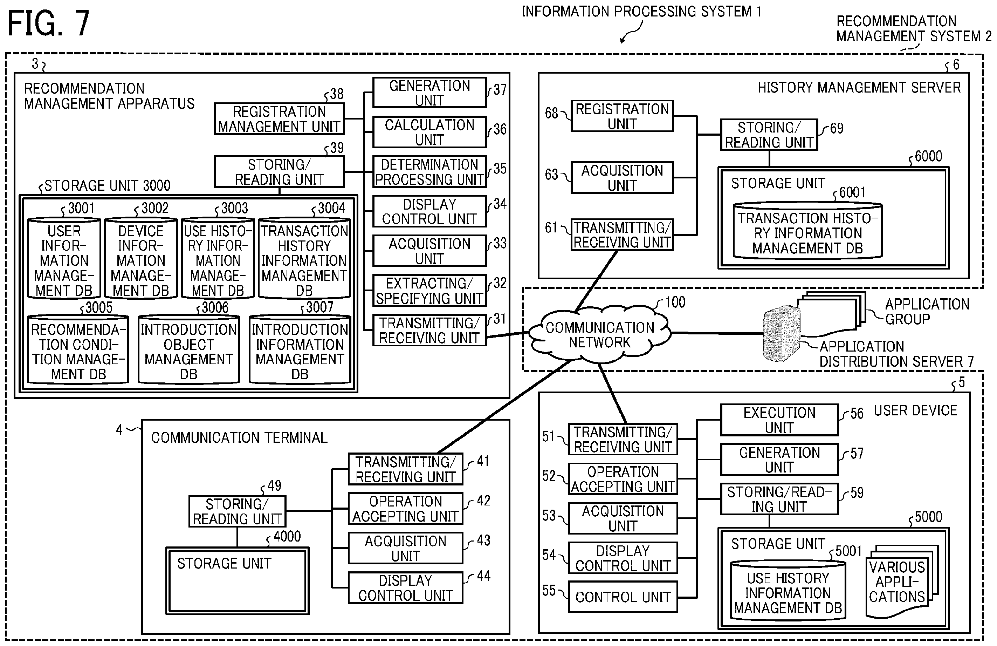

Functional configurations of the information processing system 1 according to the present embodiment are described next with reference to FIGs. 7 to 17. FIG. 7 is a diagram illustrating an example of functional configurations of the information processing system 1. FIG. 7 illustrates terminals or apparatuses relating to processes or operations described later among terminals and apparatuses illustrated in FIG. 3.

### Functional Configurations of Recommendation Management Apparatus

Functional configurations of the recommendation management apparatus 3 are described with reference to FIGs. 4 and 7. As illustrated in FIG. 7, the recommendation management apparatus 3 includes a transmitting/receiving unit 31, an extracting/specifying unit 32, an acquisition unit 33, a display control unit 34, a determination processing unit 35, a calculation unit 36, a generation unit 37, a registration management unit 38, and a storing/reading unit 39. These functional units are functions that are implemented by or means that are caused to function by operating one or more of the hardware resources illustrated in FIG. 4 in response to a command from the CPU 301 in accordance with a program for the recommendation management apparatus 3 developed from at least one of the ROM 302, the EEPROM 304, and the HD 305 to the RAM 303. The recommendation management apparatus 3 includes a storage unit 3000 constructed by at least one of the ROM 302, the EEPROM 304, and the HD 305 illustrated in FIG. 4. Further, the storage unit 3000 stores a communication program (communication application) for performing communication with each apparatus or each terminal via the communication network 100, a browser application, an introduction object management application for transmitting an introduction effect on an introduction object to the communication terminal 4 or the user device 5, and so forth.

### Each Functional Configuration of Recommendation Management Apparatus

Each functional configuration of the recommendation management apparatus 3 is described next in detail. The transmitting/receiving unit 31 of the recommendation management apparatus 3 illustrated in FIG. 7 is mainly implemented by processing of the CPU 301 on the network I/F 311 and the short-range communication I/F 308, and transmits or receives various data (or information) to or from each terminal or each apparatus via the communication network 100. The transmitting/receiving unit 31 transmits a recommendation information notification including information on at least one specified introduction object and generated difference information notification screen information to the communication terminal 4 or the user device 5 communicable with the recommendation management apparatus 3. After the transmission of the difference information notification screen information, the transmitting/receiving unit 31 transmits alternative introduction object storage destination information (uniform resource locator (URL) information or the like) indicating a storage destination of an alternative introduction object that serves as an alternative of the introduction object (further recommended application or the like) to the communication terminal 4 or the user device 5. In the present embodiment, the transmitting/receiving unit 31 functions as an example of at least one means of transmission means and receiving means.

The extracting/specifying unit 32 is mainly implemented by processing of the CPU 301 and extracts and specifies an introduction object in response to a recommendation information notification request transmitted by the communication terminal 4 or the user device 5. In the present embodiment, the extracting/specifying unit 32 functions as an example of at least one means of extraction means and specification means.

The acquisition unit 33 is mainly implemented by processing of the CPU 301. In the present embodiment, the acquisition unit 33 functions as first acquisition means that acquires use history information (first history information) relating to a use history relating to a function of the user device 5. In the present embodiment, the acquisition unit 33 functions as second acquisition means that acquires transaction history information (second history information) relating to a transaction history of the user. The transaction history information includes respective items of information relating to a purchase history, a contract history, and a research history relating to the user device 5. Thus, the acquisition unit 33 may include a plurality of acquisition means.

The display control unit 34 is mainly implemented by processing of the CPU 301 on the display 307, and controls displaying of various screens and information (data) on at least one of the communication terminal 4 and the user device 5. The display control unit 34 displays a display screen generated in compliance with, for example, Hyper Text Markup Language (HTML) on at least one of the display 407 of the communication terminal 4 and the panel display 540a of the user device 5 using a browser. In the present embodiment, the display control unit 34 functions as an example of display control means.

The determination processing unit 35 is mainly implemented by processing of the CPU 301 and makes various determinations in the recommendation management apparatus 3. In the present embodiment, the determination processing unit 35 functions as an example of determination processing means.

The calculation unit 36 is mainly implemented by processing of the CPU 301. The calculation unit 36 calculates difference information indicating a difference between pre-introduction history information for a predetermined period before introduction of an introduction object indicated in introduction object identification information and post-introduction history information for a predetermined period after the introduction of the introduction object indicated in the introduction object identification information, based on the use history information and the transaction history information. The calculation unit 36 calculates the difference information using the post-introduction history information for the predetermined period after the introduction of the introduction object introduced after the introduction is prompted, and the pre-introduction history information. The calculation unit 36 calculates and sets the predetermined period before the introduction and the predetermined period after the introduction mutually independently (individually). The predetermined period before the introduction and the predetermined period after the introduction that are calculated and set mutually independently (individually) may be the same period or different periods. In the embodiment, the calculation unit 36 functions as an example of calculation means.

The generation unit 37 is mainly implemented by processing of the CPU 301. The generation unit 37 generates difference information notification screen information including the difference information calculated by the calculation unit 36 and analysis result storage destination information indicating a storage destination of an analysis result obtained by an analysis on the difference information. In the present embodiment, the generation unit 37 functions as an example of generation means.

The registration management unit 38 is mainly implemented by processing of the CPU 301. The registration management unit 38 executes a user authentication process using user identification information and a password transmitted by the communication terminal 4. The registration management unit 38 manages a user device 5 associated with customer identification information for identifying a customer, a user associated with the customer identification information, and introduction object identification information for identifying an introduction object introduced in association with the customer identification information. A data table (each database (DB)) for performing the above-described management will be described later. In the present embodiment, the registration management unit 38 functions as an example of registration means.

The storing/reading unit 39 is mainly implemented by processing of the CPU 301 on at least one of the ROM 302, the EEPROM 304, and the HD 305, and stores various data (or information) in the storage unit 3000 or reads various data (or information) from the storage unit 3000. In the present embodiment, the storing/reading unit 39 functions as an example of storing/reading means.

### User Information Management Table

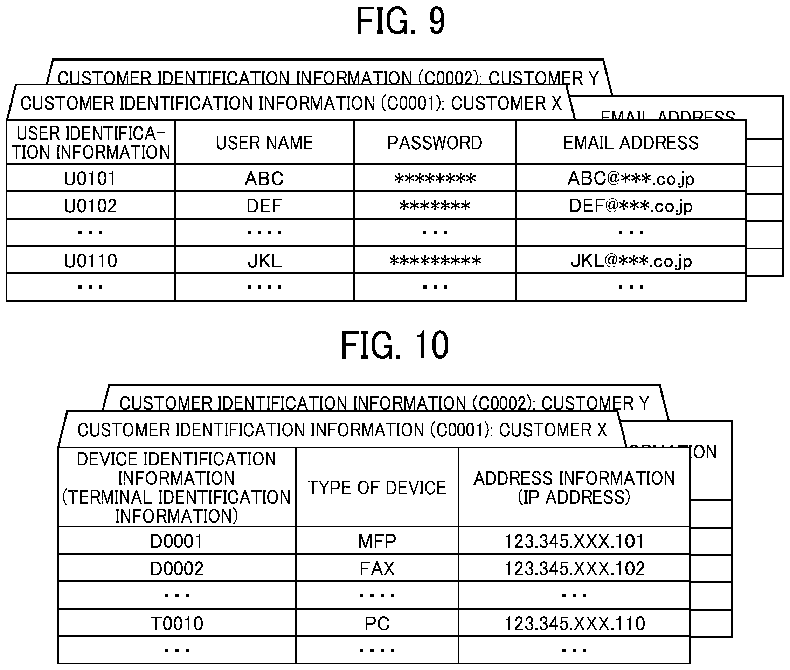

FIG. 9 is a table presenting an example of a user information management table. The configuration of the data table described below is an example, and the configuration is not limited thereto. A user information management DB 3001 including the user information management table illustrated in FIG. 9 is constructed in the storage unit 3000 of the recommendation management apparatus 3. In the user information management table, at least one of customer identification information and a customer name serves as a tab, and a user name, a password, and an email address are stored and managed in association with each other per user identification information divided in each tab. Among these items of information, the customer identification information and the customer name are identification information given to a customer X who uses the user device 5 in the recommendation management system 2, and are given in, for example, "C0001" or "C0002". The user identification information is information for identifying a user included in (belonging to) the customer, and is given in, for example, "U0001" or "U0002" and managed. The user name is the name of a user having user identification information. The password is identification information associated with the user identification information at the time of login when the information processing system 1 including the recommendation management system 2 is used, and is input by the user at the time of initial startup (at the time of login) or the like. The email address is an address when the user uses an email given to the user. In the present embodiment, the user information management table (user information management DB 3001) functions as an example of user history information management means. The user information management DB 3001 may store the role of the user or the presence of administrative permission per user identification information. For example, user identification information corresponding to an administrative user who manages the user device 5 is stored in association with information indicating that the role is the administrative user or that the user has administrative permission. In contrast, user identification information corresponding to a general user who uses the user device 5 is stored in association with information indicating that the role is the general user or that the user does not have administrative permission. In the user information management DB 3001, information indicating whether the recommendation management apparatus 3 transmits a recommendation information notification or a difference information notification may be stored per user identification information. For example, the user identification information corresponding to the administrative user is stored in association with information indicating that the recommendation information notification is to be transmitted.

### Device Information Management Table

FIG. 10 is a table presenting an example of a device information management table. The configuration of the data table described below is an example, and the configuration is not limited thereto. A device information management DB 3002 including the device information management table illustrated in FIG. 10 is constructed in the storage unit 3000 of the recommendation management apparatus 3. In the device information management table, at least one of customer identification information and a customer name serves as a tab, and a type of device and address information are stored and managed in association with each other per device identification information (terminal identification information) divided in each tab. Among these items of information, the device identification information is information for identifying the user device 5 included in (belonging to) the customer, and is given in, for example, "D0001" or "D0002" and managed. The device identification information including information on the communication terminal 4 in addition to the information on the user device 5 is managed. This is to be used when the recommendation management apparatus 3 notifies the communication terminal 4 of a recommended introduction object, calculated difference information, or the like. When the recommendation management apparatus 3 notifies the communication terminal 4 of recommendation information or difference information for recommending the introduction object, the recommendation management apparatus 3 specifies the communication terminal 4 from the device identification information based on the customer identification information serving as a notification object, and transmits the notification to the destination indicated by the address information. The user may be specified from the user identification information based on the customer identification information, and the notification may be transmitted to the email address. The type of device is the type of apparatus provided as the user device 5, and examples of the type of device include "MFP", "scanner", "fax (facsimile apparatus)", "electronic whiteboard", "projector", "PC", "smartphone", and "interactive voice operation apparatus (smart speaker)". The address information is address information for specifying the user device 5 in the information processing system 1, and is given by, for example, an IP address and managed.

In the device information management DB 3002, information indicating whether the recommendation management apparatus 3 transmits a recommendation information notification may be stored per device identification information. For example, the device identification information corresponding to the user device 5 and the communication terminal 4 managed by the administrative user is stored in association with information indicating that the recommendation information notification or the difference information notification is to be transmitted.

The device information management table is used for the following purposes. For example, the device information management table is used when it is determined, based on information regarding device management (for example, device identification information), which customer identification information is to be stored in association with when log information is received from a device that is not managed in a first history information management table (described later) (for example, a device that has just been installed by the customer and whose log has not yet been collected in the past). The device information management table is used when the recommendation management apparatus 3 determines which device is requested for log information. In this case, the address information is used when the recommendation management apparatus 3 makes an inquiry to the user device 5.

In the present embodiment, the device information management table (device information management DB 3002) functions as an example of device history information management means.

### Use History Information Management Table

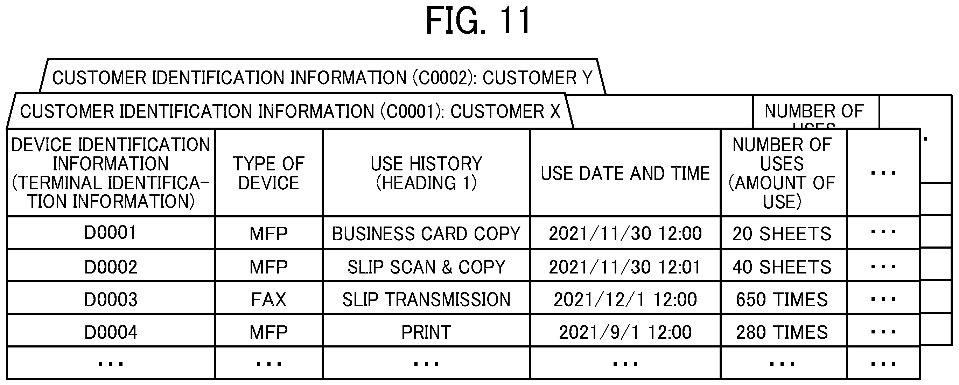

FIG. 11 is a table presenting an example of a use history information management table. The configuration of the data table described below is an example, and the configuration is not limited thereto. A use history information management DB 3003 including the use history information management table illustrated in FIG. 11 is constructed in the storage unit 3000 of the recommendation management apparatus 3. In the use history information management table, at least one of customer identification information and a customer name serves as a tab, and headings including a type of device, a use history (heading 1), a use date and time, and the number of uses (the amount of use) are stored and managed in association with each other per device identification information divided in each tab. Among these headings, the use history (heading 1) is an example of first history information indicating a use history relating to a function of the user device 5. The use history (heading 1) is given by, for example, "business card copy", "slip scan & copy", "search", and "video viewing". That is, the use history (heading 1) is information indicating a function or an application executed by the user device 5. The use date and time represents the date and time when the use history has been accumulated (that is, the date and time when the function of the application or the like has been executed) or a predetermined period. The number of uses (the amount of use) represents the number of uses of the use history (heading 1) on the date and time given as the use date and time or in the predetermined period. The number of uses (the amount of use) may be the number of times the function or the application has executed predetermined processing, the number of times the function or the application has accepted the execution, or the number or the volume of media, files, or data to be processed. The recommendation management apparatus 3 can desirably set the timing of acquiring the use history information (the number of uses or the amount of use) relating to the use history from the user device 5. The timing of the acquisition may be, for example, every day, every three days, or every ten days. Thus, for example, when the recommendation management apparatus 3 acquires predetermined use history information (the number of uses or the amount of use) every ten days, use history information (the total number of uses or the total amount of use) for ten days is extracted.

When the type of device is a MFP, the conceivable contents of the use history (heading 1) managed in the use history information management table include copy & print, scan, facsimile transmission/reception, and authentication. When the type of device is an electronic whiteboard (IWB), for example, projection, writing, cooperation between bases, and sharing of a result are conceivable. When the type of device is a projector, for example, projection and writing are conceivable. The devices described above are devices when the recommendation management apparatus 3 transmits information to each user device.

When the type of device is a smartphone, the conceivable contents of the use history (heading 1) managed in the use history information management table include, for example, search, dithering, information sharing (social networking service, SNS), call/email, viewing and listening of a video, a still image, or music, and navigation (position, action history). In this case, the recommendation management apparatus 3 transmits information to the smartphone (PC) instead of the user device. In the present embodiment, the use history information management table (use history information management DB 3003) functions as an example of use history information management means.

### Transaction History Information Management Table

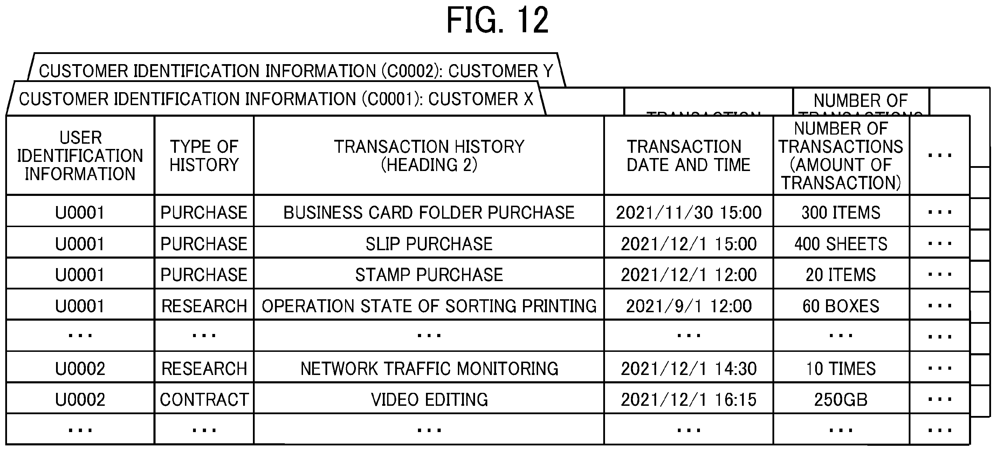

FIG. 12 is a table presenting an example of a transaction history information management table. The configuration of the data table described below is an example, and the configuration is not limited thereto. A transaction history information management DB 3004 including the transaction history information management table illustrated in FIG. 12 is constructed in the storage unit 3000 of the recommendation management apparatus 3. In the transaction history information management table, at least one of customer identification information and a customer name serves as a tab, and headings including a type of history, a transaction history (heading 2), a transaction date and time, and the number of transactions (the amount of transaction) are stored and managed in association with each other per user identification information divided in each tab. The type of history is given by, for example, "purchase", "research", or "contract" made by the user. The transaction history (heading 2) is an example of second history information indicating a transaction history of a transaction by the user. The transaction history (heading 2) is given by, for example, "business card folder purchase", "slip purchase", "stamp purchase", "operation state of sorting printing", and "video editing". The transaction date and time represents the date and time when the transaction history has been accumulated or a predetermined period. The number of transactions (the amount of transaction) represents the number of transactions of the transaction history (heading 2) on the date and time given as the transaction date and time or in the predetermined period. As described above, the second history information includes purchase history information relating to a purchase history of a supply or the like, contract history information relating to a contract history of any of various services or licenses, and research history information relating to a research history of a questionnaire result or a monitoring result of a user environment. Since the history management server 6 does not manage the customer identification information, each transaction information collected by the recommendation management apparatus 3 is associated with the customer identification information to generate the transaction history information management DB 3004.

When the type of history is purchase and the purchase object is an office supply, the conceivable contents of the transaction history (heading 2) managed in the transaction history information management table include, for example, a business card folder, paper, ink and toner, a peripheral device, office furniture, office ware, and other office supplies. When the type of history is purchase and the purchase object is a care supply, a care product is conceivable. When the type of history is purchase and the purchase object is construction or work, for example, a blackboard, a tool, conveyance, polishing, and a surveying instrument are conceivable. When the type of history is purchase and the purchase object is a safety sign, for example, a safety sign and a safety product are conceivable. When the type of history is purchase and the purchase object is crime prevention and disaster prevention, for example, a crime prevention product and a disaster prevention product are conceivable. When the type of history is purchase and the purchase object is a store supply, for example, a cash register, a sealer, and a banner are conceivable. When the type of history is purchase and the purchase object is a packing supply, for example, a box, a shock absorbing member, and a tape are conceivable. The above-listed contents serve as the types of history managed as the purchase history included in the transaction history by the recommendation management apparatus 3.

The conceivable contents of the transaction history (heading 2) managed in the transaction history information management table include a sign-up for a webinar when the type of history is a seminar. When the type of history is power sale, for example, a power sale service is conceivable. When the type of history is a call, for example, a telephone service is conceivable. When the type of history is a material, for example, an illustration and a template are conceivable. When the type of history is an article, for example, know-how, manner, and trend are conceivable. The above-listed contents serve as the types of history managed as the contract history (contract date and time, contract content, and so forth) included in the transaction history by the recommendation management apparatus 3.

When the history information is customer information, the conceivable contents of the transaction history (heading 2) managed in the transaction history information management table include, for example, the number of devices of the company, the number of devices of another company, a customer attribute, an interest/inconvenience, and a contract period. When the type of history is research, for example, monitoring information on network traffic is conceivable. The above-listed contents serve as types of history managed as the research history (questionnaire answer result, hearing result, monitoring result, and so forth) included in the transaction history by the recommendation management apparatus 3.

The number of transactions (the amount of transaction) indicates the number of purchased items or the number of times of purchase when the type of history is purchase, indicates a research result when the type of history is research, and indicates a contract content, or the number of people or the number of devices subjected to contract objects when the type of history is contract. In the present embodiment, the transaction history information management table (transaction history information management DB 3004) functions as an example of transaction history information management means. Recommendation Condition Management Table

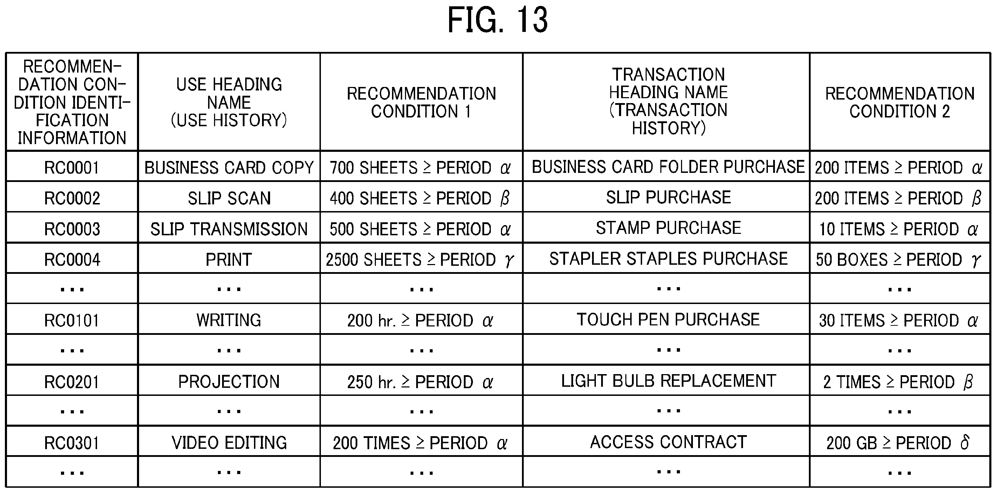

FIG. 13 is a table presenting an example of a recommendation condition management table. The configuration of the data table described below is an example, and the configuration is not limited thereto. A recommendation condition management DB 3005 including the recommendation condition management table illustrated in FIG. 13 is constructed in the storage unit 3000 of the recommendation management apparatus 3. In the recommendation condition management table, headings including a use heading name (use history), a recommendation condition 1, a transaction heading name (transaction history), and a recommendation condition 2 are stored and managed in association with each other per recommendation condition identification information. The recommendation condition identification information is identification information for identifying a recommendation condition when an introduction object such as an application is recommended, and is given in, for example, "RC0001" or "RC0002". The use heading name (use history) indicates a heading name used in the user device 5, and is given by, for example, a heading name such as "business card copy" or "slip scan". The recommendation condition 1 is given a threshold value for recommendation for the heading given by the use heading name. The transaction heading name (transaction history) indicates a heading name as a transaction history different from the use history in the user device 5, and is given by, for example, a heading name such as "business card folder purchase" or "slip purchase".

The recommendation condition 2 is given a threshold value for recommendation for the heading given by the transaction heading name.

A recommendation condition indicated by "RC0001" is described. In this case, when the number of sheets of "business card copy" that is a function of the user device 5 is 700 sheets or more during a period indicated by a period α and the number of times of "business card folder purchase" is 200 items or more during the period indicated by the period α as indicated by the use heading names, it is determined that the recommendation condition indicated by "RC0001" is satisfied. Thus, introduction of the introduction object is prompted to a predetermined customer when the above-described predetermined recommendation condition is satisfied for the use history and the transaction history. In the present embodiment, the recommendation condition management table (recommendation condition management DB 3005) functions as an example of recommendation condition management means.

### Introduction Object Management Table

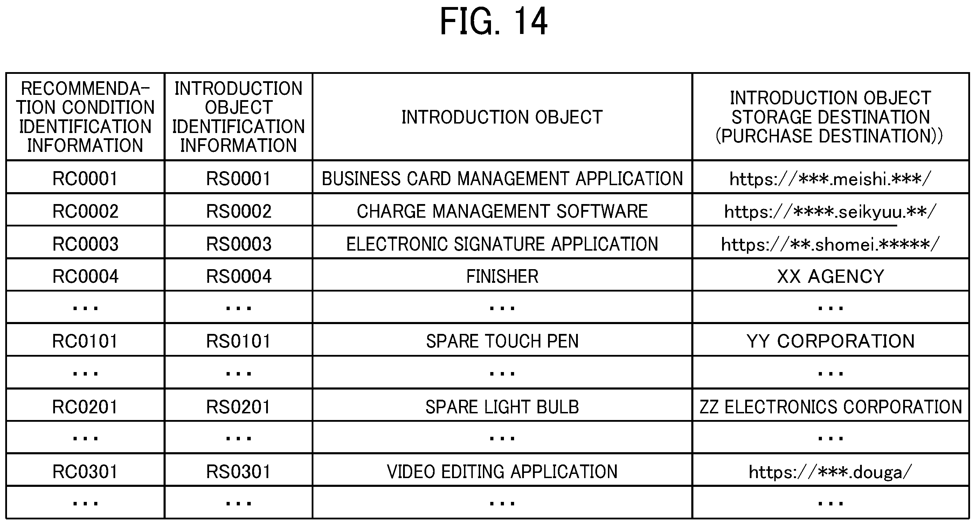

FIG. 14 is a table presenting an example of an introduction object management table. The configuration of the data table described below is an example, and the configuration is not limited thereto. An introduction object management DB 3006 including the introduction object management table illustrated in FIG. 14 is constructed in the storage unit 3000 of the recommendation management apparatus 3. In the introduction object management table, headings including introduction object identification information, an introduction object, and an introduction object storage destination (purchase destination) are stored and managed in association with each other per recommendation condition identification information. Among these items of information, the introduction object identification information is identification information for identifying an introduction object such as an application, and is given in, for example, "RS0001" or "RS0002". The introduction object represents an entity of the application or the like recommended to the user device 5, and is given by, for example, "business card management application" or "charge management software". The introduction object storage destination (purchase destination) represents a location where the introduction object is stored, and is given by a URL, a company name, or the like. In the present embodiment, the introduction object management table (introduction object management DB 3006) functions as an example of introduction object management means. Introduction Information Management Table

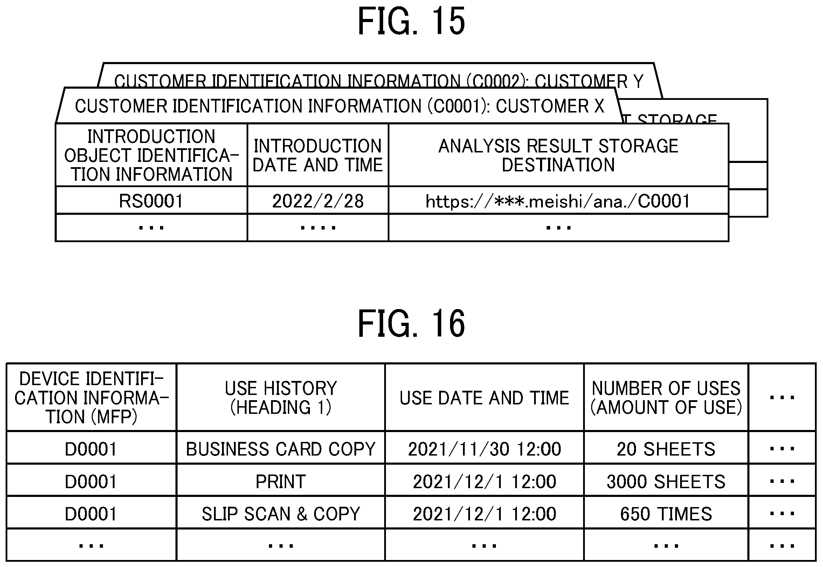

FIG. 15 is a table presenting an example of an introduction information management table. The configuration of the data table described below is an example, and the configuration is not limited thereto. An introduction information management DB 3007 including the introduction information management table illustrated in FIG. 15 is constructed in the storage unit 3000 of the recommendation management apparatus 3. In the introduction information management table, at least one of customer identification information and a customer name serves as a tab, and headings including an introduction date and time and an analysis result storage destination are stored and managed in association with each other per introduction object identification information divided in each tab. Among these items of information, the introduction date and time represents the date and time when the introduction object was introduced, or the date and time when the introduction object was purchased or contracted. The analysis result storage destination represents a location where a result obtained by an analysis on an introduction effect after the introduction of the introduction object is stored, and is given by a URL or the like similarly to the introduction object storage destination. In the present embodiment, the introduction information management table (introduction information management DB 3007) functions as an example of introduction information management means.

### Functional Configurations of Communication Terminal

Functional configurations of the communication terminal 4 are described next with reference to FIGs. 5 and 7. As illustrated in FIG. 7, the communication terminal 4 includes a transmitting/receiving unit 41, an operation accepting unit 42, an acquisition unit 43, a display control unit 44, and a storing/reading unit 49. These functional units are functions that are implemented by or means that are caused to function by operating one or more of the hardware resources illustrated in FIG. 5 in response to a command from the CPU 401 in accordance with a program for the communication terminal 4 developed from at least one of the ROM 402, the EEPROM 404, and the recording medium 414 to the RAM 403. The communication terminal 4 includes a storage unit 4000 constructed by at least one of the ROM 402, the EEPROM 404, and the recording medium 414 illustrated in FIG. 5. Further, the storage unit 4000 stores a communication program (communication application) for performing communication with each apparatus or each terminal via the communication network 100, a browser application, an introduction object management application for displaying an introduction effect on an introduction object, and so forth.

### Each Functional Configuration of Communication Terminal

Each functional configuration of the communication terminal 4 is described next in detail. The transmitting/receiving unit 41 of the communication terminal 4 illustrated in FIG. 7 is mainly implemented by processing of the CPU 401 on the network I/F 411 and the short-range communication I/F 408, and transmits or receives various data (or information) to or from each terminal or each apparatus via the communication network 100. In the present embodiment, the transmitting/receiving unit 41 functions as an example of at least one means of transmission means and receiving means.

The operation accepting unit 42 is mainly implemented by the CPU 401 processing signals generated through various operations accepted by at least one of the touch panel 412 and the pointing device 413. In the present embodiment, the operation accepting unit 42 functions as an example of accepting means.

The acquisition unit 43 is mainly implemented by processing of the CPU 401 and acquires various types of information transmitted by the recommendation management apparatus 3. The acquisition unit 43 acquires, for example, recommendation information included in a recommendation information notification response transmitted by the recommendation management apparatus 3. In the present embodiment, the acquisition unit 43 functions as an example of acquisition means.

The display control unit 44 is mainly implemented by processing of the CPU 401 on the display 407, and controls displaying of various screens and information (data) in the communication terminal 4. The display control unit 44 uses, for example, a browser to display a display screen generated in HTML or the like on the display 407 of the communication terminal 4 (hereinafter, simply referred to as display 407). The display control unit 44 controls the display 407 to display, for example, the acquired recommendation information. In the present embodiment, the display control unit 44 functions as an example of display control means.

The storing/reading unit 49 is mainly implemented by processing of the CPU 401 on at least one of the ROM 402, the EEPROM 404, and the recording medium 414, and stores various data (or information) in the storage unit 4000 or reads various data (or information) from the storage unit 4000. In the present embodiment, the storing/reading unit 49 functions as an example of storing/reading means.

### Functional Configurations of User Device

Functional configurations of the user device 5 are described next with reference to FIGs. 6 and 7. As illustrated in FIG. 7, the user device 5 includes a transmitting/receiving unit 51, an operation accepting unit 52, an acquisition unit 53, a display control unit 54, a control unit 55, an execution unit 56, a generation unit 57, and a storing/reading unit 59. These functional units are functions that are implemented by or means that are caused to function by operating one or more of the hardware resources illustrated in FIG. 6 in response to a command from the CPU 501 in accordance with a program for the user device 5 developed from at least one of the ROM 502a and the HD 508 to the RAM 502b. The user device 5 includes a storage unit 5000 constructed by at least one of the ROM 502a and the HD 508 illustrated in FIG. 6.

### Each Functional Configuration of User Device

Each functional configuration of the user device 5 is described next in detail. The transmitting/receiving unit 51 of the user device 5 illustrated in FIG. 7 is mainly implemented by processing of the CPU 501 on the network I/F 550 and the short-range communication circuit 520, and transmits or receives various data (or information) to or from each terminal or each apparatus via the communication network 100. The transmitting/receiving unit 51 transmits first history information indicating a use history relating to a function of a user device that provides history information to the recommendation management apparatus 3. In the present embodiment, the transmitting/receiving unit 51 functions as an example of at least one means of transmission means and receiving means.

The operation accepting unit 52 is mainly implemented by the CPU 501 processing signals generated through various operations accepted by at least one of the panel display 540a and the operation button section 540b of the operation panel 540. In the present embodiment, the operation accepting unit 52 functions as an example of accepting means.

The acquisition unit 53 is mainly implemented by processing of the CPU 501 and acquires various types of information transmitted by the recommendation management apparatus 3. The acquisition unit 53 acquires, for example, recommendation information included in a recommendation information notification response transmitted by the recommendation management apparatus 3, and application data (program or the like) relating to any of various applications which are examples of the introduction object. In the present embodiment, the acquisition unit 53 functions as an example of acquisition means.

The display control unit 54 is mainly implemented by processing of the CPU 501 on the panel display 540a of the operation panel 540, and controls displaying of various screens and information (data) in the user device 5. Moreover, the display control unit 54 uses, for example, a browser to display a display screen generated in HTML or the like on the operation panel 540. In the present embodiment, the MFP is illustrated as an example of the user device 5; however, it is not limited thereto. Thus, the hardware resource of each functional unit of the user device 5 can be appropriately changed in accordance with the hardware resource included in each user device 5. In the present embodiment, the display control unit 54 functions as an example of display control means.

The control unit 55 is mainly implemented by processing of the CPU 501 and performs various types of control in the user device 5. In the present embodiment, the control unit 55 functions as an example of control means.

The execution unit 56 is mainly implemented by processing of the CPU 501, and starts various applications or the like, starts a print engine, executes a print process, and executes a projection process in the user device 5. In the present embodiment, the execution unit 56 functions as an example of execution means.

The generation unit 57 is mainly implemented by processing of the CPU 501, and generates various types of notification information (screen information) for notification to and displaying on the user device 5. In the present embodiment, the generation unit 57 functions as an example of generation means.

The storing/reading unit 59 is mainly implemented by processing of the CPU 501 on at least one of the ROM 502a and the HD 508, and stores various data (or information) in the storage unit 5000 or reads various data (or information) from the storage unit 5000. In the present embodiment, the storing/reading unit 59 functions as an example of storing/reading means.

### Use History Information Management Table

FIG. 16 is a table presenting an example of a use history information management table. The configuration of the data table described below is an example, and the configuration is not limited thereto. A use history information management DB 5001 including the use history information management table illustrated in FIG. 16 is constructed in the storage unit 5000 of the user device 5. In the use history information management DB 5001, a use history (heading 1), a use date and time, and the number of uses (the amount of use) are registered and updated every time a user uses a function of the user device 5. In the use history information management table, headings including the use history (heading 1), the use date and time, and the number of uses (the amount of use) are stored and managed in association with each other per device identification information. These headings correspond to the respective headings of the use history information management table managed by the recommendation management apparatus 3. That is, the content of each heading of the use history information management table transmitted by the user device 5 that manages the use history information per device is reflected in the corresponding heading of the use history information management table managed by the recommendation management apparatus 3. Each user device 5 stores the use history information management table in the storage unit 5000 of the user device 5. In the present embodiment, the use history information management table (use history information management DB 5001) functions as an example of use history information management means.

### Functional Configurations of History Management Server

Functional configurations of the history management server 6 are described next with reference to FIGs. 4 and 7. As illustrated in FIG. 7, the history management server 6 includes a transmitting/receiving unit 61, an acquisition unit 63, a registration unit 68, and a storing/reading unit 69. These functional units are functions that are implemented by or means that are caused to function by operating one or more of the hardware resources illustrated in FIG. 4 in response to a command from the CPU 601 in accordance with a program for the history management server 6 developed from at least one of the ROM 602, the EEPROM 604, and the HD 605 to the RAM 603. The history management server 6 includes a storage unit 6000 constructed by at least one of the ROM 602, the EEPROM 604, and the HD 605 illustrated in FIG. 4. Further, the storage unit 6000 stores a communication program (communication application) for performing communication with each apparatus or each terminal via the communication network 100, a browser application, a history management application for managing transaction history information transmitted by a user device, and so forth.

### Each Functional Configuration of History Management Server

Each functional configuration of the history management server 6 is described next in detail. The transmitting/receiving unit 61 of the history management server 6 illustrated in FIG. 7 is mainly implemented by processing of the CPU 601 on the network I/F 611 and the short-range communication I/F 608, and transmits or receives various data (or information) to or from each terminal or each apparatus via the communication network 100. In the present embodiment, the transmitting/receiving unit 61 functions as an example of at least one means of transmission means and receiving means.

The acquisition unit 63 is mainly implemented by processing of the CPU 601 and acquires transaction history information transmitted by the user device 5, the communication terminal 4, a computer of a person in charge of sales, or the like. In the present embodiment, the acquisition unit 63 functions as an example of acquisition means.

The registration unit 68 is implemented by processing of the CPU 601 and registers the transaction history information transmitted by the user device 5, the communication terminal 4, the computer of the person in charge of sales, or the like in a transaction history information management DB 6001. In the present embodiment, the registration unit 68 functions as an example of registration means.

The storing/reading unit 69 is mainly implemented by processing of the CPU 601 on at least one of the ROM 602, the EEPROM 604, and the HD 605, and stores various data (or information) in the storage unit 6000 or reads various data (or information) from the storage unit 6000. In the present embodiment, the storing/reading unit 69 functions as an example of storing/reading means.

### Transaction History Information Management Table

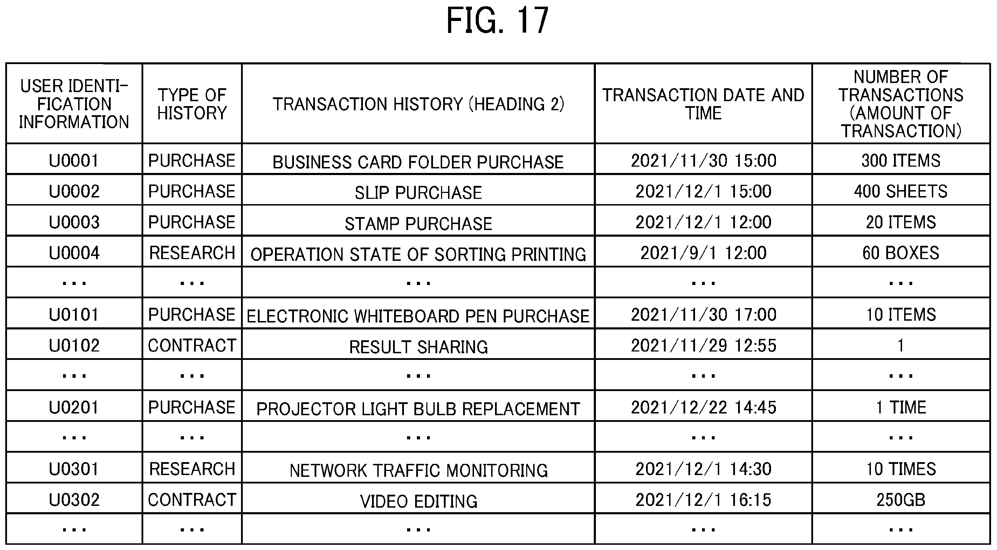

FIG. 17 is a table presenting an example of a transaction history information management table. The configuration of the data table described below is an example, and the configuration is not limited thereto. A transaction history information management DB 6001 including the transaction history information management table illustrated in FIG. 17 is constructed in the storage unit 6000 of the history management server 6. In the transaction history information management table, headings including a type of history, a transaction history (heading 2), a transaction date and time, and the number of transactions (the amount of transaction) are stored and managed in association with each other per user identification information. These headings correspond to the respective headings of the transaction history information management table managed by the recommendation management apparatus 3. That is, the content of each heading of the transaction history information management table relating to a predetermined customer and transmitted by the history management server 6 that manages the transaction history information per customer is reflected in the corresponding heading of the transaction history information management table managed by the recommendation management apparatus 3. In the present embodiment, the transaction history information management table (transaction history information management DB 6001) functions as an example of transaction history information management means.

### Functional Configurations of Application Distribution Server

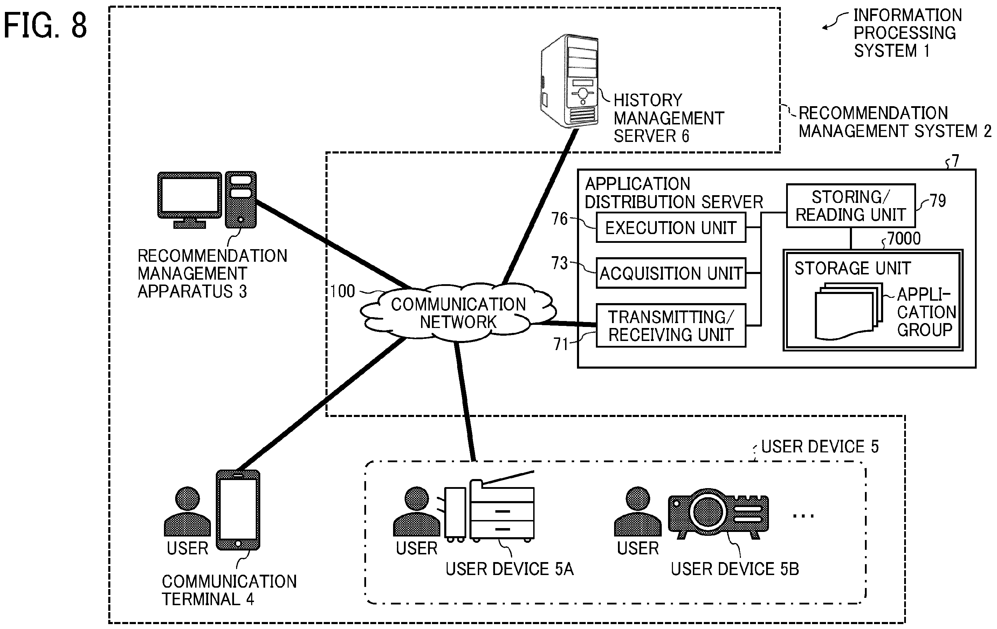

Functional configurations of the application distribution server 7 are described next with reference to FIGs. 4 and 8. As illustrated in FIG. 8, the application distribution server 7 includes a transmitting/receiving unit 71, an acquisition unit 73, an execution unit 76, and a storing/reading unit 79. These functional units are functions that are implemented by or means that are caused to function by operating one or more of the hardware resources illustrated in FIG. 4 in response to a command from the CPU 701 in accordance with a program for the application distribution server 7 developed from at least one of the ROM 702, the EEPROM 704, and the HD 705 to the RAM 703. The application distribution server 7 includes a storage unit 7000 constructed by at least one of the ROM 702, the EEPROM 704, and the HD 705 illustrated in FIG. 4. Further, the storage unit 7000 stores a communication program (communication application) for performing communication with each apparatus or each terminal via the communication network 100, a browser application, various data included in an application group, a function execution application for executing a predetermined function transmitted by the user device 5, an application as an introduction object to be installed in the user device 5, and so forth. As described above, the application distribution server 7 may use an external server that is connected via the communication network 100 and is typically used. The functional configurations in this case may comply with the hardware specifications of the external server.

### Each Functional Configuration of Application Distribution Server

Each functional configuration of the application distribution server 7 is described next in detail. The transmitting/receiving unit 71 of the application distribution server 7 illustrated in FIG. 8 is mainly implemented by processing of the CPU 701 on the network I/F 711 and the short-range communication I/F 708, and transmits or receives various data (or information) to or from each terminal or each apparatus via the communication network 100. In the present embodiment, the transmitting/receiving unit 71 functions as an example of at least one means of transmission means and receiving means. For example, the transmitting/receiving unit 71 can accept a request for an application of an introduction object from the user device 5, and distribute the application of the introduction object to the user device 5.

The acquisition unit 73 is mainly implemented by processing of the CPU 701, and acquires an application distribution request transmitted by the user device 5, a processing request relating to the user device 5 and transmitted by the recommendation management apparatus 3, and so forth. In the present embodiment, the acquisition unit 73 functions as an example of acquisition means.

The execution unit 76 is mainly implemented by processing of the CPU 701, and in the present embodiment, the execution unit 76 functions as an example of execution means. For example, when a request to execute a predetermined function is received from the user device 5, the execution unit 76 provides the predetermined function to the user device 5.

The storing/reading unit 79 is mainly implemented by processing of the CPU 701 on at least one of the ROM 702, the EEPROM 704, and the HD 705, and stores various data (or information) in the storage unit 7000 or reads various data (or information) included in the application group from the storage unit 7000. In the present embodiment, the storing/reading unit 79 functions as an example of storing/reading means.

### Various Application Data

Various application data managed by the application distribution server 7 or managed by an external server or the like that can communicate with the application distribution server 7 may comply with a management method, a specification, or the like in the server that manages the various application data. There is no particular limitation on the data structure of the various application data.

### Processes or Operations of Embodiment

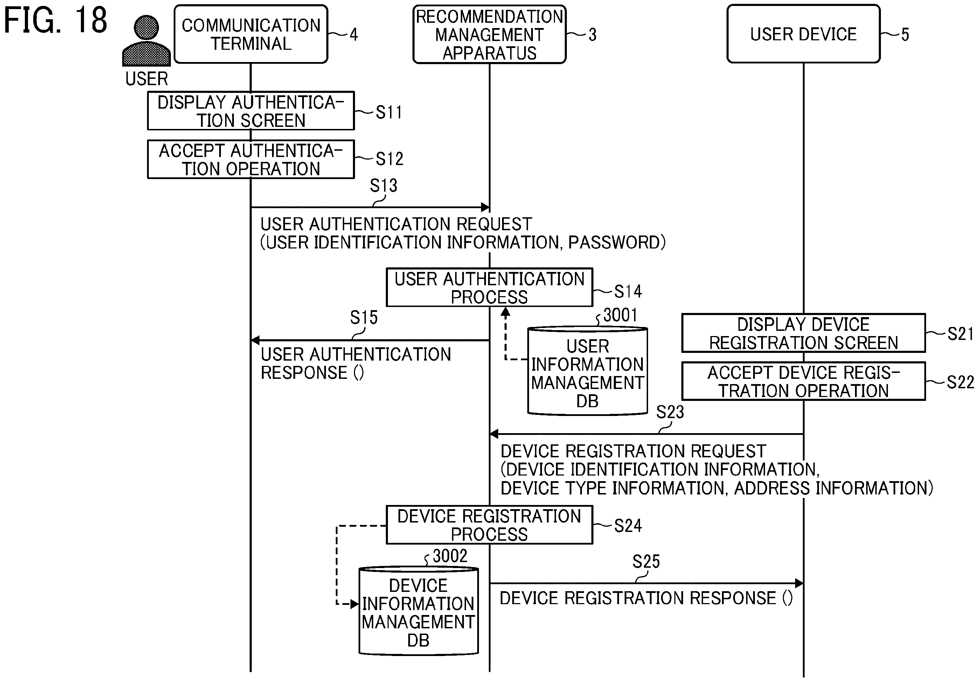

Processes or operations of the information processing system 1 according to the embodiment are described with reference to FIGs. 18 to 32.

### Authentication Process

A user authentication process and a device registration process in the information processing system 1 are described first. FIG. 18 is a sequence diagram illustrating an example of the user authentication process and the device registration process. The display control unit 44 of the communication terminal 4 controls the display 407 of the communication terminal 4 to display an authentication screen (step S11).

### Example Display Screen

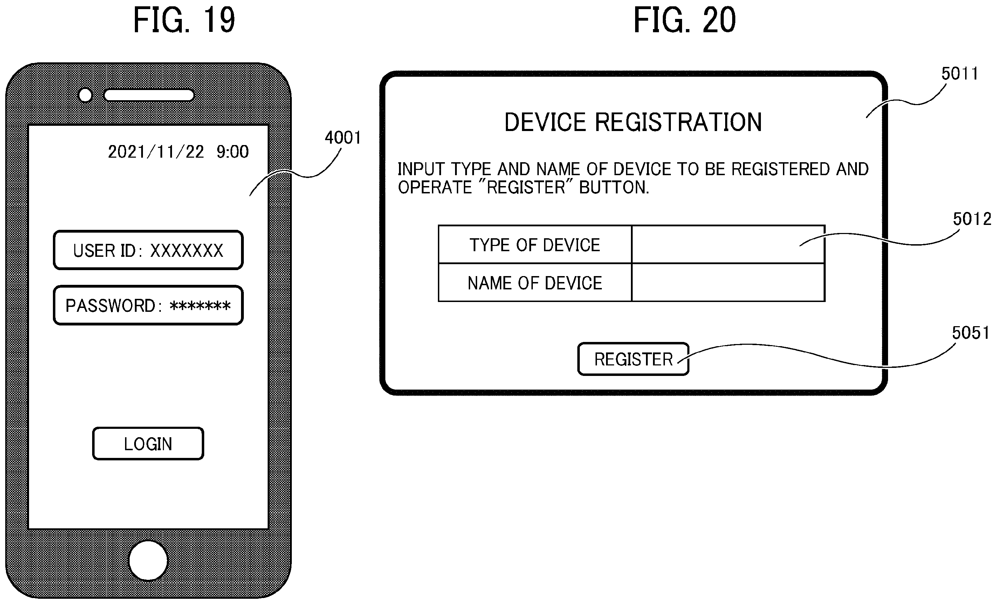

FIG. 19 is a view illustrating an example display screen when user authentication is executed in the communication terminal 4. As illustrated in FIG. 19, the display control unit 44 controls the display 407 of the communication terminal 4 to display a login authentication screen 4001. On the login authentication screen 4001, input areas for inputting a user ID and a password, and a login button are displayed. The user can input the user ID and the password to these input areas and operate the login button.

Referring back to FIG. 18, the operation accepting unit 42 accepts an authentication operation (step S12).

Then, the transmitting/receiving unit 41 transmits a user authentication request to the recommendation management apparatus 3 (step S13). Accordingly, the transmitting/receiving unit 31 of the recommendation management apparatus 3 receives the user authentication request transmitted by the communication terminal 4. At this time, the user authentication request includes user identification information (user ID) and a password.

Then, the registration management unit 38 of the recommendation management apparatus 3 executes the user authentication process (step S14). Specifically, the registration management unit 38 searches the user information management DB 3001 (see FIG. 9) associated with customer identification information indicating a customer to which the user belongs in advance using the user identification information and the password received in step S13 as search keys to read corresponding login information. Then, the registration management unit 38 verifies whether the received user identification information and password match the read user identification information and password. Accordingly, when matching is verified, the input user identification information and password are considered to be correct.

Then, the transmitting/receiving unit 31 transmits a user authentication response for the user authentication request received in step S13 to the communication terminal 4 (step S15). Accordingly, the transmitting/receiving unit 41 of the communication terminal 4 receives the user authentication response transmitted by the recommendation management apparatus 3. At this time, the user authentication response includes information indicating a user authentication result (for example, authentication OK).

Through the above-described processing, the communication terminal 4 and the recommendation management apparatus 3 succeed in a login authentication process and a session establishment process for establishing a session, which are typically performed, and can communicate with each other.

The display control unit 54 of the user device 5 controls the panel display 540a to display a device registration screen (step S21). It is presupposed that a predetermined login authentication process and a session establishment process for establishing the session are successful between the user device 5 and the recommendation management apparatus 3, and the user device 5 and the recommendation management apparatus 3 are in a state communicable with each other.

### Example Display Screen

FIG. 20 illustrates an example display screen at the time of device registration in the user device 5. As illustrated in FIG. 20, the display control unit 54 controls the panel display 540a of the user device 5 to display a device registration screen 5011. On the device registration screen 5011, an input area 5012 for inputting the type of device and the name of device, and a registration button 5051 are displayed. The user can input the type of device and the name of device to the input area 5012 and operate the registration button 5051. Instead of the input by the user on the device registration screen 5011 illustrated in FIG. 20, the device registration process may be performed through communication between the user device 5 and the recommendation management apparatus 3 without the input by the user.

Referring back to FIG. 18, the operation accepting unit 52 accepts a device registration operation (step S22).

Then, the transmitting/receiving unit 51 transmits a device registration request to the recommendation management apparatus 3 (step S23). Accordingly, the transmitting/receiving unit 31 of the recommendation management apparatus 3 receives the device registration request transmitted by the user device 5. At this time, the device registration request includes device identification information, device type information, and address information indicating the destination of the user device 5.

Then, the registration management unit 38 of the recommendation management apparatus 3 executes the device registration process (step S24). Specifically, the registration management unit 38 registers the device identification information, the device type information, and the address information indicating the destination of the user device 5 included in the device registration request received in step S23, in the device information management DB 3002 (see FIG. 10) associated with the customer identification information indicating the customer to which the user belongs in advance. Accordingly, the recommendation management apparatus 3 can be associated with the user device 5 in the information processing system 1 (recommendation management system 2).

Then, the transmitting/receiving unit 31 transmits a device registration response as a response for the device registration request received in step S23 to the user device 5 (step S25). Accordingly, the transmitting/receiving unit 51 of the user device 5 receives the device registration response transmitted by the recommendation management apparatus 3. At this time, the device registration response may include a message indicating that the device registration is completed, a registration completion flag, or the like.

As described above, the user device 5 may perform a login process for the recommendation management apparatus 3 before the processing in step S21. In the login process, the user device 5 transmits a login request including a user name and a password to the recommendation management apparatus 3, and the recommendation management apparatus 3 authenticates the user based on the information included in the login request and the information managed in the user information management DB 3001 (see FIG. 9). Accordingly, the recommendation management apparatus 3 can specify the user identification information or the customer identification information corresponding to the user.

The processing from step S11 to step S15 and the processing from step S21 to step S25 described above may be performed asynchronously with each other.

In the information processing system 1, it is presupposed that the history management server 6 and the application distribution server 7 connected to each other via the communication network 100 are also in a state communicable with the recommendation management apparatus 3 and the user device 5.

In the recommendation management system 2 according to the present embodiment, for example, when the above-described processing in steps S13 and S15 is executed, another apparatus or the like may be present between the communication terminal 4 and the recommendation management apparatus 3. That is, information (data) transmitted or received between the communication terminal 4 and the recommendation management apparatus 3 may be transmitted or received once via another apparatus or the like. The above-described configuration can be applied even when another processing step is present between the communication terminal 4 and the recommendation management apparatus 3.

In the recommendation management system 2 according to the present embodiment, for example, when the above-described processing in steps S23 and S25 is executed, another apparatus or the like may be present between the recommendation management apparatus 3 and the user device 5. That is, information (data) transmitted or received between the recommendation management apparatus 3 and the user device 5 may be transmitted or received once via another apparatus or the like. The above-described configuration can be applied even when another processing step is present between the recommendation management apparatus 3 and the user device 5.

### Registration Process of History Information

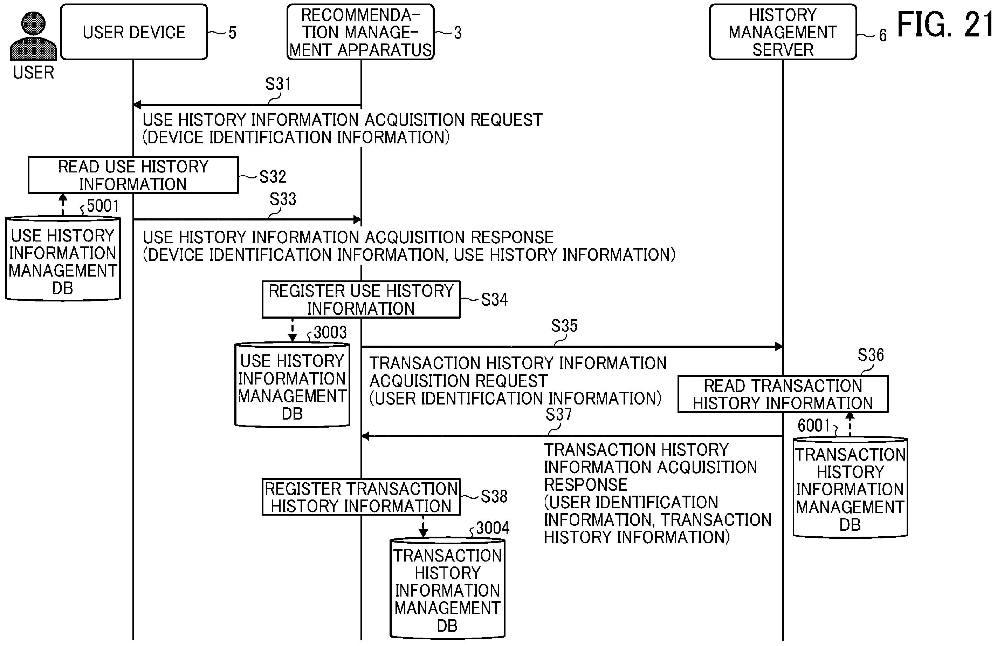

A registration process of history information is described next. FIG. 21 is a sequence diagram illustrating an example of a history information acquisition process. The transmitting/receiving unit 31 of the recommendation management apparatus 3 transmits a use history information acquisition request to the user device 5 (step S31). Accordingly, the transmitting/receiving unit 51 of the user device 5 receives the use history information acquisition request transmitted by the recommendation management apparatus 3. At this time, the use history information acquisition request includes device identification information for identifying the user device 5. The user device 5 may periodically transmit history information to the recommendation management apparatus 3. In this case, the recommendation management apparatus 3 can omit the processing in step S31.

In the example illustrated in FIG. 21, the recommendation management apparatus 3 acquires use history information per customer identified by customer identification information. At this time, the recommendation management apparatus 3 specifies at least one user device 5 associated with the customer identification information based on information regarding customer management (such as customer identification information), and transmits the use history information acquisition request to each specified user device 5 sequentially or collectively. Accordingly, the recommendation management apparatus 3 transmits the use history information acquisition request to each of the plurality of user devices 5 owned by the customer. Consequently, the recommendation management apparatus 3 can manage the acquired use history information in association with the customer identification information managed in the use history information management DB 3003 (see FIG. 11).

Then, the storing/reading unit 59 of the user device 5 reads the use history information (step S32). Specifically, the storing/reading unit 59 searches the use history information management DB 5001 (see FIG. 16) using the device identification information received in step S31 as a search key to read the use history information relating to the corresponding use history. The use history information read at this time is an example of first history information.

Then, the transmitting/receiving unit 51 transmits a use history information acquisition response as a response for the use history information acquisition request received in step S31 to the recommendation management apparatus 3 (step S33). Accordingly, the transmitting/receiving unit 31 of the recommendation management apparatus 3 receives the use history information acquisition response transmitted by the user device 5, and the acquisition unit 33 acquires the use history information acquisition response. At this time, the use history information acquisition response includes the device identification information for identifying the user device 5 and the read use history information. The use history information further includes a type of device, information corresponding to a use history (heading 1), a use date and time (or period), and the number of uses (the amount of use). That is, the acquisition unit 33 acquires information including the information corresponding to the use history (heading 1), the use date and time (or period), and the number of uses (the amount of use) as first history information indicating a use history relating to a function of the user device 5. The processing in step S32 can be performed by each of all the user devices 5 that have received the use history information acquisition request.

Then, the registration management unit 38 of the recommendation management apparatus 3 registers the use history information received in step S33 (step S34). Specifically, the registration management unit 38 registers items of information of the headings including the device identification information, the type of device, the use history (heading 1), the use date and time, and the number of uses (the amount of use) received in step S33 in the corresponding headings managed in the use history information management DB 3003 (see FIG. 11). The registration management unit 38 performs registration so that use histories do not overlap each other. Accordingly, the recommendation management apparatus 3 specifies customer identification information corresponding to the device identification information based on the received device identification information. Consequently, the recommendation management apparatus 3 can manage the use history information per user device 5 in association with the customer identification information.

Then, the transmitting/receiving unit 31 transmits a transaction history information acquisition request to the history management server 6 (step S35). Accordingly, the transmitting/receiving unit 61 of the history management server 6 receives the transaction history information acquisition request transmitted by the recommendation management apparatus 3. At this time, the transaction history information acquisition request includes user identification information for identifying the user. When the history management server 6 manages transaction history information in association with customer identification information, the customer identification information may be included in the transaction history information acquisition request instead of the user identification information.

Then, the storing/reading unit 69 of the history management server 6 reads transaction history information (step S36). Specifically, the storing/reading unit 69 searches the transaction history information management DB 6001 (see FIG. 17) using the user identification information received in step S35 as a search key to read transaction history information relating to a transaction history as an example of corresponding second history information.

Then, the transmitting/receiving unit 61 transmits a transaction history information acquisition response as a response for the transaction history information acquisition request received in step S35 to the recommendation management apparatus 3 (step S37).

Accordingly, the transmitting/receiving unit 31 of the recommendation management apparatus 3 receives the transaction history information acquisition response transmitted by the history management server 6, and the acquisition unit 33 acquires the transaction history information acquisition response. At this time, the transaction history information acquisition response includes the user identification information and the read transaction history information. The transaction history information further includes a type of history, information corresponding to a transaction history (heading 2), a transaction date and time (or period), and the number of transactions (the amount of transaction). That is, the acquisition unit 33 acquires information including the type of history, the transaction date and time (or period), and the number of transactions (the amount of transaction) relating to the transaction history (heading 2) indicating a history different from the use history (heading 1) managed by the user device 5.

Then, the registration management unit 38 of the recommendation management apparatus 3 registers the transaction history information included in the transaction history information acquisition response received in step S37 (step S38).

Specifically, the registration management unit 38 registers the transaction history information corresponding to the user identification information received in step S37 in the headings of the type of history and the transaction history (heading 2) managed in the transaction history information management DB 3004 (see FIG. 12). The registration management unit 38 registers respective items of information in the headings corresponding to the respective headings including, for example, the type of history, the transaction history (heading 2), the transaction date and time, and the number of transactions (the amount of transaction) as the transaction history information transmitted by the history management server 6 and having the user identification information of "U0001". In this case, the extracting/specifying unit 32 of the recommendation management apparatus 3 searches the transaction history information management DB 3004 (see FIG. 12) using the received user identification information as a search key to specify corresponding customer identification information. Accordingly, the recommendation management apparatus 3 can manage the transaction history information per user in association with the customer identification information.

The recommendation management apparatus 3 may register the type of device included in the use history information received in step S33 in each data table in association with the device identification information in advance. In this case, the use history information transmitted by the user device 5 does not have to include the type of device.

As described above, the transmitting/receiving unit 41 of the communication terminal 4 may transmit a procedure request relating to a purchase or a contract through a Web site to the history management server 6. At this time, the user who makes the procedure request performs the login process and then makes the procedure request. In the login process, the user inputs the user name, the password, and so forth, and authenticates the user with reference to additional information on screen (user management information). Accordingly, the history management server can specify the user identification information and the customer identification information on the user, and hence can manage the procedure request and the history information in association with the user identification information or the customer identification information. In this case, the history management server 6 may register the transaction history information corresponding to the procedure request in the transaction history information management DB 6001 (see FIG. 17), and the transmitting/receiving unit 61 may transmit a response therefor to the communication terminal 4.

The transmitting/receiving unit 41 of the communication terminal 4 may transmit a procedure request relating to a purchase or a contract through a Web site to the history management server 6 via a purchase site additionally provided in the information processing system 1. In this case, the history management server 6 may acquire transaction information corresponding to the procedure request from an external server or the like that provides the purchase site. Then, the transmitting/receiving unit 61 of the history management server 6 may transmit a procedure response relating to the purchase or the contract through the Web site to the communication terminal 4.

For the procedure request relating to the purchase or the contract through the Web site, an access may be made using a telephone or a facsimile apparatus. In this case, a person in charge of the history management server 6 may manually input information to the history management server 6 using a person-in-charge PC or the like additionally provided in the information processing system 1. In this case, the person in charge inputs user identification information or customer identification information together. Then, the history management server 6 may register corresponding transaction information in the transaction history information management DB 6001 (see FIG. 17), and the transmitting/receiving unit 61 may transmit a response therefor to the person-in-charge PC.

In the recommendation management system 2 according to the present embodiment, for example, when the above-described processing in steps S35 and S37 is executed, another apparatus or the like may be present between the recommendation management apparatus 3 and the history management server 6. That is, information (data) transmitted or received between the recommendation management apparatus 3 and the history management server 6 may be transmitted or received once via another apparatus or the like. The above-described configuration can be applied even when another processing step is present between the recommendation management apparatus 3 and the history management server 6.

Each processing described with reference to FIG. 21 may be periodically executed, or may be executed when the recommendation management apparatus 3 receives a notification request for an introduction object from the communication terminal 4 or the user device 5.

### Recommendation Determination Process in Recommendation Management Apparatus

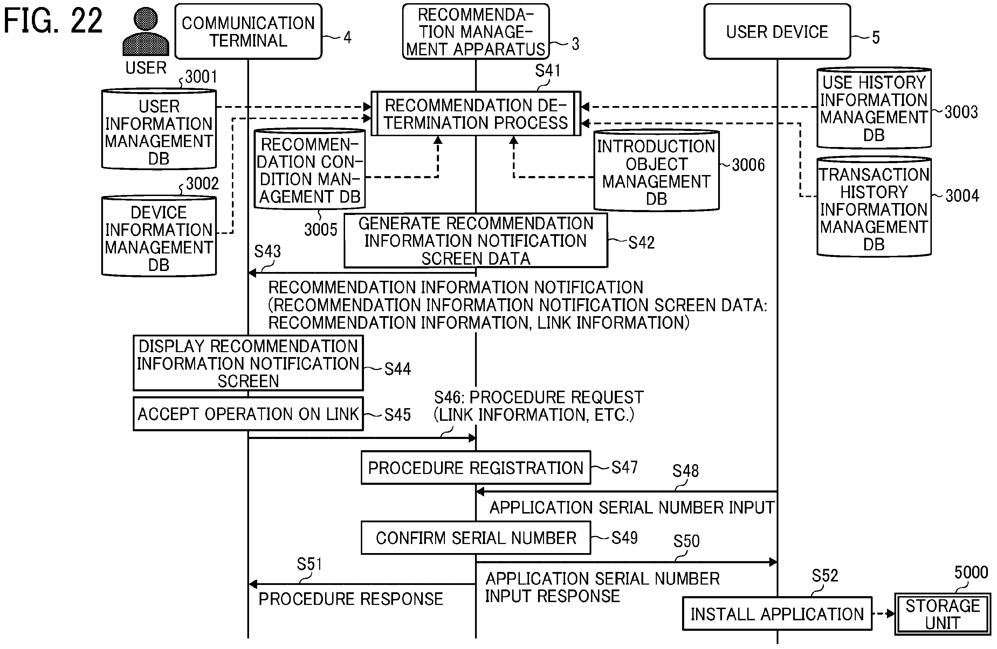

A recommendation determination process that is executed by the recommendation management apparatus 3 is described next. FIG. 22 is a sequence diagram illustrating an example of the recommendation determination process. As illustrated in FIG. 22, the functional units including the determination processing unit 35 of the recommendation management apparatus 3 perform the recommendation determination process (step S41). The recommendation management apparatus 3 may perform the recommendation determination process in response to a request from the communication terminal 4 or the user device 5, or may periodically perform the recommendation determination process. Specifically, the recommendation management apparatus 3 makes various determinations relating to recommendation of an introduction object, which is an example of a recommendation object, for the user device 5.

### Details of Recommendation Determination Process

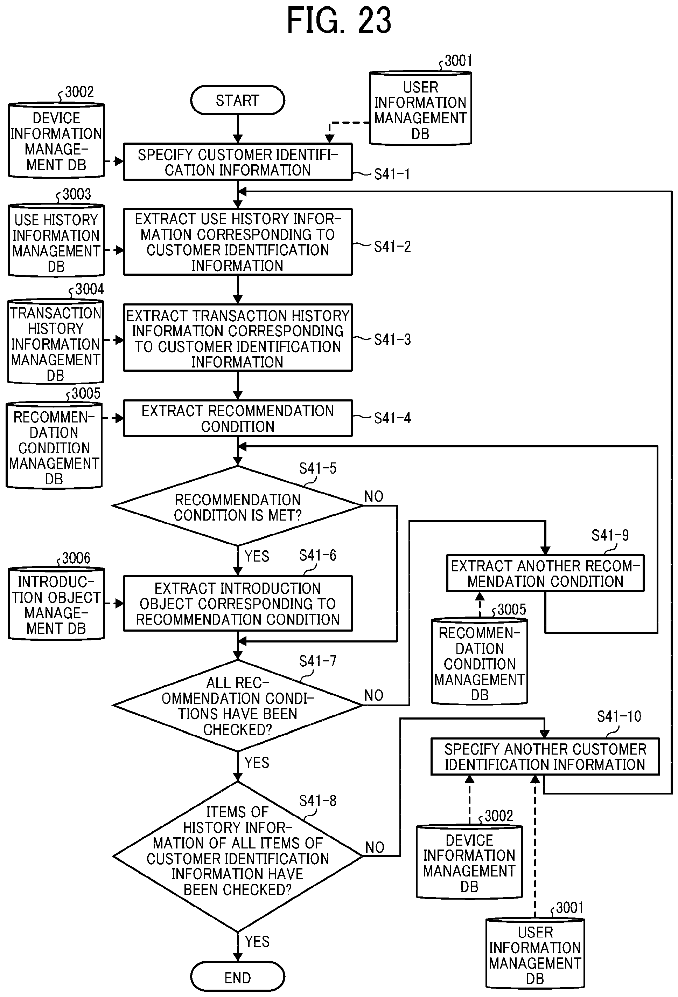

Details of the recommendation determination process are described here. FIG. 23 is a flowchart presenting an example of the recommendation determination process. The flowchart described below is an example of the embodiment, and the present disclosure is not limited thereto.

The extracting/specifying unit 32 of the recommendation management apparatus 3 specifies customer identification information (step S41-1). Specifically, the extracting/specifying unit 32 specifies customer identification information among items of customer identification information managed in the user information management DB 3001 or the device information management DB 3002. When the recommendation determination process is performed in response to a recommendation information notification request transmitted by the communication terminal 4 or the user device 5, the device information management DB 3002 (see FIG. 10) is searched using device identification information included in the recommendation information notification request as a search key, or the user information management DB 3001 (see FIG. 9) is searched using user identification information included in the recommendation information notification request as a search key to specify corresponding customer identification information.

Then, the extracting/specifying unit 32 extracts use history information corresponding to the customer identification information (step S41-2). Specifically, the extracting/specifying unit 32 searches the use history information management DB 3003 (see FIG. 11) using the customer identification information specified in step S41-1 as a search key to extract corresponding use history information. In this case, the use history information management DB 3003 manages history information on at least one device per customer identification information. Even when the use history information and the customer identification information are not associated with each other in the use history information management DB 3003, the extracting/specifying unit 32 can extract history information corresponding to the customer identification information. At this time, the extracting/specifying unit 32 specifies all items of device identification information corresponding to the customer identification information specified in step S41-1 based on information regarding device management (for example, device identification information) in the use history information management DB 3003. For example, when the customer identification information specified in step S41-1 is "C0001", the extracting/specifying unit 32 extracts "D0001", "D0002", "D0003", and "D0004" as the device identification information. Then, the extracting/specifying unit 32 extracts history information corresponding to the extracted device identification information. Specifically, the extracting/specifying unit 32 extracts items of history information corresponding to all items of specified device identification information from the use history information management DB 3003. The history information to be extracted is, for example, respective items of use history information corresponding to the device identification information "D0001", "D0002", "D0003", and "D0004" among the plurality of items of use history information managed in the use history information management DB 3003.

Then, the extracting/specifying unit 32 extracts transaction history information corresponding to the customer identification information (step S41-3). Specifically, the extracting/specifying unit 32 searches the transaction history information management DB 3004 (see FIG. 12) using the customer identification information specified in step S41-1 as a search key to extract corresponding transaction history information. In this case, the transaction history information management DB 3004 manages at least one transaction history information per customer identification information. Even when the transaction history information and the customer identification information are not associated with each other in the transaction history information management DB 3004, the extracting/specifying unit 32 can extract history information corresponding to the customer identification information. At this time, the extracting/specifying unit 32 specifies all items of user identification information corresponding to the customer identification information specified in step S41-1 based on user identification information in the transaction history information management DB 3004. For example, when the customer identification information specified in step S41-1 is "C0001", "U0001" and "U0002" are extracted as the user identification information. Then, the extracting/specifying unit 32 extracts history information corresponding to each extracted user identification information. Specifically, the extracting/specifying unit 32 extracts items of history information corresponding to all items of specified user identification information from the transaction history information management DB 3004. The history information to be extracted is, for example, respective items of transaction history information corresponding to the user identification information "U0001" and "U0002" among the plurality of items of transaction history information managed in the transaction history information management DB 3004.

Then, the extracting/specifying unit 32 extracts a recommendation condition (step S41-4). Specifically, the extracting/specifying unit 32 searches the recommendation condition management DB 3005 (see FIG. 13) to extract a recommendation condition (recommendation condition 1, recommendation condition 2) associated with any recommendation condition identification information among a plurality of recommendation conditions. The extracting/specifying unit 32 extracts, for example, "business card copy" as the use heading name, "700 sheets ≥ period α" as the recommendation condition 1, "business card folder purchase" as the transaction heading name, and "200 items ≥ period α" as the recommendation condition 2 corresponding to the recommendation condition identification information "RC0001".

Then, the determination processing unit 35 determines whether the extracted history information meets the recommendation condition (step S41-5). Specifically, the determination processing unit 35, together with the calculation unit 36, aggregates history information corresponding to the use heading name designated by the recommendation condition 1 in the period designated by the recommendation condition 1. For example, the determination processing unit 35, together with the calculation unit 36, specifies history information whose use heading name is "business card copy" and whose use date and time is included in the period α, among items of history information managed in the use history information management DB 3003, and calculates the total value of the numbers of uses (the amounts of use) of the history information. In this case, the start point or the end point of the period α may be set based on the recommendation condition, or may be determined based on the date and time when the recommendation determination process is executed. The determination processing unit 35, together with the calculation unit 36, aggregates history information corresponding to the transaction heading name designated by the recommendation condition 2 in the period designated by the recommendation condition 2.

For example, the determination processing unit 35, together with the calculation unit 36, specifies history information whose transaction heading name is "business card folder purchase" and whose transaction date and time is included in the period α among items of history information managed in the transaction history information management DB 3004, and calculates the total value of the numbers of transactions (the amounts of transaction).

Then, the determination processing unit 35 determines whether the calculated total values meet the recommendation condition.

For example, the determination processing unit 35 determines that the calculated total value meets the recommendation condition 1 when the total value calculated based on the use history information management DB 3003 is 700 sheets or more. The determination processing unit 35 determines that the calculated total value meets the recommendation condition 2 when the total value calculated based on the transaction history information management DB 3004 is 200 items or more.

When it is determined that the extracted history information meets both the recommendation condition 1 and the recommendation condition 2 (step S41-5: YES), the extracting/specifying unit 32 extracts an introduction object corresponding to the recommendation condition determined to be met (step S41-6). Specifically, the extracting/specifying unit 32 searches the introduction object management DB 3006 (see FIG. 14) using the recommendation condition identification information corresponding to the recommendation condition determined to be met in step S41-5 as a search key to extract a corresponding introduction object.

Then, the determination processing unit 35 determines whether all recommendation conditions have been checked (step S41-7). When all the recommendation conditions have been checked (step S41-7: YES), the operation proceeds to processing in step S41-8.

In contrast, when not all the recommendation conditions have been checked (step S41-7: NO), the determination processing unit 35 extracts another recommendation condition (step S41-9), and then the operation returns to the processing in step S41-5.

In step S41-8, the determination processing unit 35 determines whether items of history information of all items of customer identification information have been checked. When the items of history information of all the items of customer identification information have been checked (step S41-8: YES), the determination processing unit 35 exits the flow.

When the items of history information of all the items of customer identification information have not been checked (step S41-8: NO), the determination processing unit 35 specifies another customer identification information (step S41-10), and then returns to the processing in step S41-2.

The recommendation management apparatus 3 repeats the processing from step S41-1 to step S41-5 the number of times corresponding to the number of items of customer identification information desirably extracted. When the recommendation determination process is executed in response to a recommendation information notification request transmitted by the communication terminal 4 or the user device 5, the recommendation management apparatus 3 may check the history information just for the user corresponding to the device identification information or the customer identification information included in the request, and hence the processing described in step S41-8 and step S41-10 can be omitted.

### Generation of Recommendation Information Notification Screen Data

Referring back to FIG. 22, the generation unit 37 of the recommendation management apparatus 3 generates recommendation information notification screen data (step S42). Specifically, the generation unit 37 generates recommendation information notification screen data that defines a recommendation information notification screen for recommending an introduction object (for example, the "business card management application" determined in step S41) to be recommended to the user device 5. The recommendation management apparatus 3 may store the recommendation information notification screen generated in step S42 or information on the introduction object determined in step S41 in association with the customer ID. Accordingly, when the recommendation management apparatus 3 is requested by the communication terminal 4 or the user device 5 to transmit a recommendation information notification, the recommendation management apparatus 3 can transmit the recommendation information notification screen based on the recommendation information notification screen created in advance or the information on the introduction object.

Then, the transmitting/receiving unit 31 transmits a recommendation information notification to the communication terminal 4 (step S43). For example, when the recommendation determination process is performed in response to a recommendation information notification request transmitted by the communication terminal 4 or the user device 5, the transmitting/receiving unit 31 transmits a recommendation information notification to the communication terminal 4 or the user device 5 that is the transmission source of the recommendation information notification request. The transmitting/receiving unit 31 may transmit the recommendation information notification based on address information managed in the device information management DB 3002 or an email address managed in the user information management DB 3001. In this case, the transmitting/receiving unit 31 may transmit the recommendation information notification to an email address of an administrative user among a plurality of email addresses managed in the user information management DB 3001 or to the user device 5 or the communication terminal 4 managed by the administrative user among a plurality of items of address information managed in the device information management DB 3002. Accordingly, the transmitting/receiving unit 41 of the communication terminal 4 receives the recommendation information notification transmitted by the recommendation management apparatus 3. The communication terminal 4 may acquire the recommendation information notification from an external server such as a mail server. At this time, the recommendation information notification includes recommendation information notification screen data, an introduction object name (application name) serving as recommendation information, a comment, link information (for example, the URL of a Web page) in which the introduction object is stored, and so forth.

Then, the display control unit 44 of the communication terminal 4 controls the display 407 to display the recommendation information notification screen included in the recommendation information notification received in step S43 (step S44). The communication terminal 4 may make an access to a Web page provided by the recommendation management apparatus 3 to display the recommendation information notification screen. For example, the recommendation management apparatus 3 performs the user authentication process in response to a user authentication request received from the communication terminal 4, and specifies the customer ID to which the authenticated user belongs. Then, a recommendation information notification screen relating to the specified customer ID is provided to the communication terminal 4. In this case, step S43 can be omitted.

### Example Display Screen

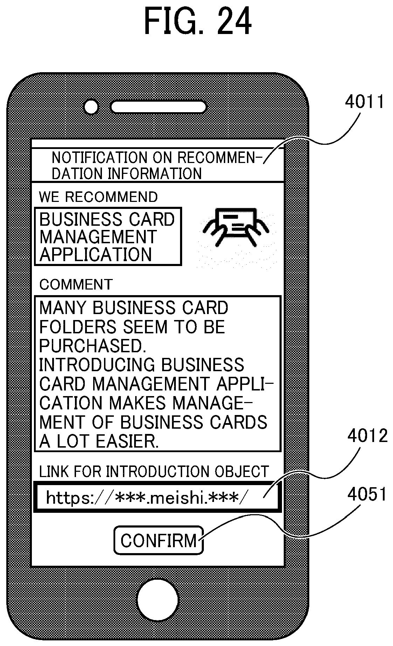

FIG. 24 is a view illustrating an example display screen for notification of recommendation information. As illustrated in FIG. 24, the display control unit 44 controls the display 407 of the communication terminal 4 to display a recommendation information notification screen 4011. On the recommendation information notification screen 4011, a link display field 4012 is displayed in which the name of an introduction object (for example, "business card management application") compatible with the user device 5 and extracted by the recommendation management apparatus 3, a comment of a recommended content, a storage destination URL of the introduction object, and so forth are described. At this time, the storage destination URL of the introduction object is information managed in the introduction object management DB 3006 (see FIG. 14) and managed in the heading of the introduction object storage destination (purchase destination) associated with the introduction object identification information. Accordingly, the user checks the content of the recommendation information notification screen 4011 and performs a desirable operation on the link display field 4012 such as making an access to the storage destination URL of the introduction object, and thus can introduce the introduction object (in this case, business card management application). The same applies to a case where the recommendation management apparatus 3 transmits a recommendation information notification to each user device 5. The storage destination URL of the introduction object may be the URL of the application distribution server 7, or may be the URL of an application registration dedicated server that is connected to the application distribution server 7 and registers an application. When the user checks the recommendation information notification screen 4011 and then operates a confirmation button 4051, the screen can be transitioned to another screen. Since such a screen is displayed on the communication terminal 4, the user using the communication terminal 4 can recognize what kind of introduction object is present for the desirable user device 5. Furthermore, the user can acquire information relating to the introduction object by making an access to the recommendation management apparatus 3, an external server, or the like based on link information included in the recommendation information notification.

### Procedure Registration Process

Purchase or contract of an introduction object based on recommendation information performed by a user is described. As described in step S41, the recommendation information included in the recommendation information notification includes, for example, the storage destination of the introduction object, or the URL of the Web page for purchase or contract of the introduction object. Referring back to FIG. 22, processing including a procedure registration process is described below.

The operation accepting unit 42 accepts an operation on a link (step S45). Specifically, the operation accepting unit 42 accepts an access to the URL or the like of a Web page indicated by the predetermined link information displayed in the link display field 4012 illustrated in FIG. 24.

Then, the transmitting/receiving unit 41 transmits a procedure request to the recommendation management apparatus 3 (step S46). For example, when the user who has checked the recommendation information desires to introduce the introduction object, the user makes an access to the Web page and transmits a procedure request to perform a procedure of purchase or contract of the introduction object. Accordingly, the transmitting/receiving unit 31 of the recommendation management apparatus 3 receives the procedure request transmitted by the communication terminal 4. At this time, the procedure request includes user identification information, customer identification information, and introduction object identification information in addition to URL information on the Web page serving as the link information whose access has been accepted in step S45.

Then, the registration management unit 38 of the recommendation management apparatus 3 performs procedure registration (step S47). Specifically, the registration management unit 38 executes processing relating to procedure registration for introducing the introduction object, such as the purchase or the contract of the introduction object, based on the procedure request received in step S46. The processing relating to the procedure registration includes storage of the procedure request and notification to a predetermined person in charge for proceeding with the processing of the purchase or the contract based on the procedure request. The processing relating to the procedure registration also includes processing of registering customer identification information, introduction object identification information on the introduction object relating to the purchase or the contract, and date and time information indicating the date and time of receiving the procedure request or the date and time of executing the procedure registration in association with each other. At this time, the recommendation management apparatus 3 specifies customer identification information relating to the user identification information included in the procedure request. Accordingly, the generation unit 37 can generate introduction information as indicated in the introduction information management DB 3007 (see FIG. 15). Consequently, the recommendation management apparatus 3 can manage an object that is recommended to a predetermined user by the recommendation management apparatus 3 and that is purchased or contracted by the recommended predetermined user, instead of an object that is purchased or contracted regardless of recommendation by the recommendation management apparatus 3.

Described below is, for example, a case where the introduction object is a native application (an application that is to be installed in the user device 5). That is, when the introduction object is the native application, the recommendation management apparatus 3 performs a license assignment process on the user device 5 or the user belonging to the customer of the application in the procedure registration. At this time, the application distribution server 7 may execute processing such as confirmation of a serial number and assignment of a license.

In this state, the transmitting/receiving unit 51 of the user device 5 transmits an application serial number to the recommendation management apparatus 3 (step S48). Accordingly, the transmitting/receiving unit 31 of the recommendation management apparatus 3 receives the application serial number transmitted by the user device 5. At this time, the transmitting/receiving unit 51 may transmit the device identification information on the user device 5. Accordingly, the recommendation management apparatus 3 can manage the device identification information on the user device 5 to which the application has been introduced and the introduction object identification information in association with each other, in the introduction information management DB 3007.

Then, the recommendation management apparatus 3 confirms the application serial number received in step S48 (step S49).

Then, the transmitting/receiving unit 31 transmits an application serial number input response as a response for the application serial number received in step S48 (step S50). Accordingly, the transmitting/receiving unit 51 of the user device 5 receives the application serial number input response transmitted by the recommendation management apparatus 3.

Then, the transmitting/receiving unit 31 of the recommendation management apparatus 3 transmits a procedure response as a response for the procedure request received in step S46 to the communication terminal 4 (step S51). Accordingly, the transmitting/receiving unit 41 of the communication terminal 4 receives the procedure response transmitted by the recommendation management apparatus 3.

In response to receiving the application number input response in step S50, the execution unit 56 of the user device 5 installs the application indicated by the application serial number in a predetermined area of the storage unit 5000 (step S52). In this case, the application may be downloaded to the user device 5 via a network, or a storage medium storing the application may be inserted to the user device 5 to download the application to the user device 5. Further, when installation of the application is completed, the user device 5 may transmit introduction object identification information indicating the installed application and device identification information. Accordingly, the recommendation management apparatus 3 updates the introduction information management DB 3007. The processing from step S46 to step S51 and the processing from step S48 to step S52 may be performed asynchronously with each other, and hence the order of the processing is not limited.

In the processing illustrated in FIG. 22, there may be an embodiment in which the recommendation information notification request is transmitted from the communication terminal 4 to the recommendation management apparatus 3 as described above.

The installation of the application is an example of an introduction process for making the application available to the user device 5. For example, in a case of a native application that is available when the application is installed in the user device 5, the user device 5 installs the application as the introduction process. In contrast, when the application is a Web application whose function is provided in cooperation with an external server such as the application distribution server 7, the following processing is performed. That is, as the introduction process, the user device 5 displays a shortcut to a browser application or the like on a home screen displayed on the panel display 540a of the user device 5, and performs setting for making an access to the external server when the browser application is started.

When the introduction object is an application, the recommendation management apparatus 3 performs processing so that the user or the user device 5 belonging to a customer whose procedure registration has been completed can use the application by procedure registration.

For example, when the application is a Web application, the user device 5 makes an access to an external server such as the application distribution server 7 to use a function of the application. Thus, the recommendation management apparatus 3 can transmit permission information for permitting the application distribution server 7 to provide the application function to the user device 5 belonging to the customer whose procedure registration has been completed, directly or indirectly via the user device 5 or the like.

In the above description, the user device 5 transmits the application serial number as the processing for the user device 5 to introduce the introduction object; however, it is not limited thereto. For example, the communication terminal 4 may make an access to the recommendation management apparatus to designate an introduction destination of an introduction object or an object from the communication terminal 4. For example, by accepting designation of an application that is made available by a customer through procedure registration among a plurality of applications and designation of a user device 5 desired as an introduction destination of the application among a plurality of user devices 5 belonging to the customer, the designated application can be installed in the designated user device 5. Accordingly, the recommendation management apparatus 3 can manage the introduction identification information on the introduction object and the device identification information on the user device 5 that is the introduction destination in association with each other in the introduction information management DB 3007.

### Acquisition of Recommendation Information and Installation by User Device

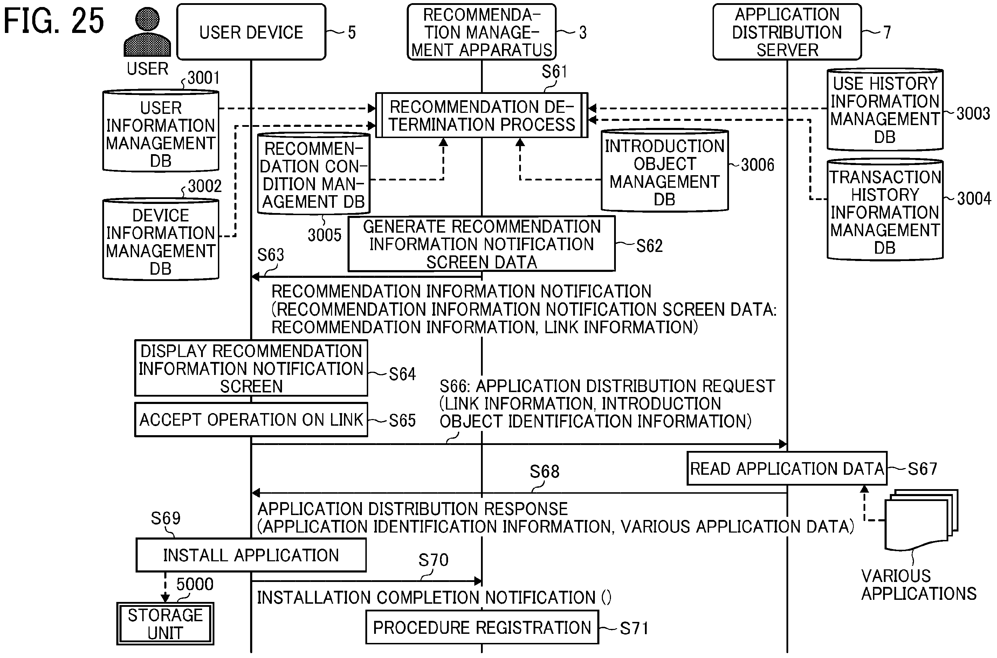

Next, an acquisition process of recommendation information in the user device 5 will be described. FIG. 25 is a sequence diagram illustrating an example of a various application acquisition process. Referring to FIG. 25, a recommendation information notification transmitted by the recommendation management apparatus 3 is displayed using an operation unit or the like provided in the user device 5, and then an acquisition and installation process of an application that is an example of an introduction object is performed. At this time, the processing from step S61 to step S65 corresponds to the processing from step S41 to step S45 illustrated in FIG. 22, and hence the description is omitted. When the user device 5 receives the recommendation information notification, banner displaying or pop-up displaying can be provided on the screen of the operation unit as displaying indicating that the recommendation information notification has been received. When the user operates the banner display portion or the pop-up display portion, the recommendation information notification screen is displayed in the user device 5. Displaying indicating that the recommendation information notification has been received or the recommendation information notification screen may be displayed when the user who has logged in to the user device 5 is an administrative user. In this case, an administrative user who manages a user device 5 can be set in advance per user device 5.

Then, the transmitting/receiving unit 51 of the user device 5 transmits an application distribution request to the application distribution server 7 based on the recommendation information received in step S63 (step S66). Accordingly, the transmitting/receiving unit 71 of the application distribution server 7 receives the application distribution request transmitted by the user device 5. At this time, the application distribution request includes, for example, URL information on a Web page whose operation has been accepted in step S65, and introduction object identification information as information for identifying the application of the introduction object, that is, the application to be an installation object. In step S66, the user can purchase or make a contract for the application that is the introduction object based on the received recommendation information. The application distribution request may include device identification information.

Then, the storing/reading unit 79 of the application distribution server 7 reads application data (step S67). Specifically, the storing/reading unit 79 reads an application associated with the introduction object identification information among various applications managed in a predetermined area of the storage unit 7000. In this case, the application distribution server 7 registers introduction object identification information and an application in association with each other in advance. The application distribution server 7 may inquire of the recommendation management apparatus 3 about the application corresponding to the introduction object identification information. Along with this processing, the acquisition unit 73 acquires the application data read from the storage unit 7000.

Then, the transmitting/receiving unit 71 transmits an application distribution response as a response for the application distribution request received in step S66 to the user device 5 (step S68). Accordingly, the transmitting/receiving unit 51 of the user device 5 receives the application distribution response transmitted by the application distribution server 7. At this time, the application distribution response includes the application identification information and the application data read in step S67 (in the case of a plurality of application distribution responses, respective items of application identification information and various application data corresponding thereto).

Then, the execution unit 56 of the user device 5 installs the application received in step S68 in a predetermined area of the storage unit 5000 (step S69). Accordingly, the user device 5 can use the predetermined application on which the user has performed the introduction operation in accordance with the recommendation information notification transmitted by the recommendation management apparatus 3. The installation of the application is an example of an introduction process for making the application available to the user device 5. For example, in a case of a native application that is available when the application is installed in the user device 5, the user device 5 installs the application as the introduction process. In contrast, when the application is a Web application whose function is provided in cooperation with an external server such as the application distribution server 7, the following processing is performed. That is, as the introduction process, the user device 5 displays a shortcut to a browser application or the like on a home screen displayed on the panel display 540a of the user device 5, and performs setting for making an access to the external server when the browser application is started.

Then, the transmitting/receiving unit 51 transmits an installation completion notification to the recommendation management apparatus 3 (step S70). Accordingly, the transmitting/receiving unit 31 of the recommendation management apparatus 3 receives the installation completion notification transmitted by the user device 5. The installation completion notification may include a comment indicating that the installation has been completed, flag information indicating the installation completion, device identification information, and introduction object identification information.

Then, the registration management unit 38 of the recommendation management apparatus 3 performs procedure registration (step S71). The procedure registration process includes processing of registering customer identification information, introduction object identification information for identifying the introduction object installed in the user device 5, an introduction date and time indicating the date and time of completion of the installation, and device identification information indicating the user device 5 with the application installed, in association with each other. At this time, the extracting/specifying unit 32 searches the device information management DB 3002 (see FIG. 10) using the device identification information included in the installation completion notification received in step S70 as a search key to specify the corresponding customer identification information. Accordingly, the registration management unit 38 registers introduction management information (introduction date and time or the like) associated with the specified customer identification information in the corresponding heading of the introduction information management DB 3007 (see FIG. 15).

With the above-described processing, the recommendation management apparatus 3 can manage an object that has been purchased or contracted because the introduction object has been recommended by the recommendation management apparatus 3, instead of an object that has been purchased or contracted regardless of the recommendation by the recommendation management apparatus 3. The timing at which the procedure registration process is executed is not limited thereto. For example, the user device 5 may request the recommendation management apparatus 3 to execute the procedure registration process at the timing of transmitting an application distribution request. When the application distribution server 7 receives the application distribution request, the application distribution server 7 may request the recommendation management apparatus 3 to execute the procedure registration process.

In the recommendation management system 2 according to the present embodiment, for example, when the above-described processing in steps S66 and S68 is executed, another apparatus or the like may be present between the user device 5 and the application distribution server 7. That is, information (data) transmitted or received between the user device 5 and the application distribution server 7 may be transmitted or received once via another apparatus or the like. The above-described configuration can be applied even when another processing step is present between the user device 5 and the application distribution server 7.

### Difference Calculation Process by Recommendation Management Apparatus

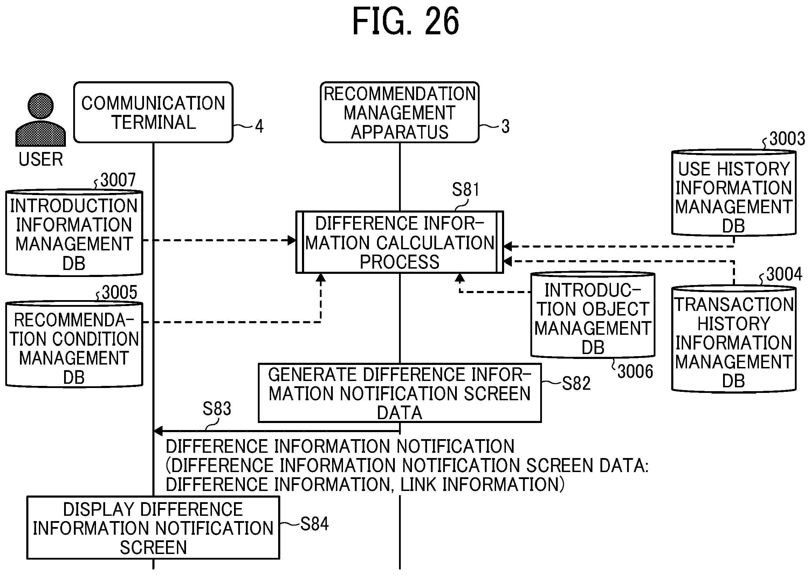

A difference calculation process by the recommendation management apparatus 3 is described next. FIG. 26 is a sequence diagram illustrating an example of a difference information calculation process. The recommendation management apparatus 3 performs a difference calculation process periodically or in response to a request from the communication terminal 4 or the user device 5 (step S81).

### Details of Difference Calculation Process

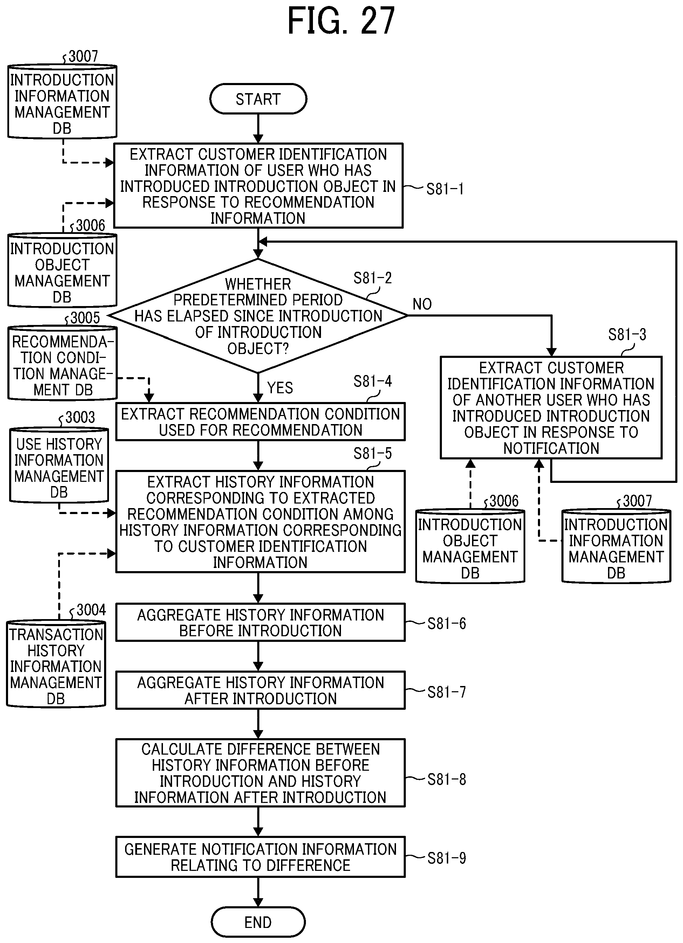

Details of the difference calculation process are described below. FIG. 27 is a flowchart presenting an example of the difference information calculation process. The flowchart described below is an example of the embodiment, and the present disclosure is not limited thereto. The extracting/specifying unit 32 of the recommendation management apparatus 3 extracts customer identification information of a user who has introduced an introduction object (service, application, or the like) in response to recommendation information (step S81-1). Specifically, the extracting/specifying unit 32 searches the introduction information management DB 3007 (see FIG. 15) to extract customer identification information in which at least one introduction object identification information is stored. When at least one introduction object identification information is stored in the introduction information management DB 3007, it is indicated that an introduction object corresponding to introduction object identification information has been introduced in response to recommendation information. When a plurality of items of introduction object identification information are managed in the introduction object management DB 3006 in association with customer identification information, the following processing can be performed per plurality of introduction objects.

Then, the determination processing unit 35 determines whether a predetermined period has elapsed since the introduction of the introduction object (step S81-2). Specifically, the determination processing unit 35 searches the introduction information management DB 3007 (see FIG. 15) using the customer identification information read in step S81-1 as a search key to read introduction date and time information indicating the introduction date and time of the introduction object. In this case, the introduction date and time indicates the date and time when the introduction object corresponding to the introduction object identification information was introduced. The determination processing unit 35 calculates an elapsed period (elapsed time) from the introduction date and time to the current time (the date and time when the difference information calculation process is executed) and determines whether a predetermined period set as a certain threshold value has elapsed in cooperation with the calculation unit 36.

When it is determined that the predetermined period has not elapsed (step S81-2: NO), the extracting/specifying unit 32 extracts customer identification information of another user who has introduced an introduction object (service, application, or the like) in response to a notification, returns to the processing in step S81-2, and repeats the processing the number of times corresponding to the number of users extracted in step S81-1 (step S81-3).

When it is determined that the predetermined period has elapsed (step S81-2: YES), the extracting/specifying unit 32 extracts a recommendation condition used for recommendation (step S81-4). Specifically, the extracting/specifying unit 32 searches the introduction object management DB 3006 (see FIG. 14) using the introduction object identification information with which it was determined that the predetermined period has elapsed from the introduction date and time in step S81-2 as a search key to read corresponding recommendation condition identification information. Further, the extracting/specifying unit 32 searches the recommendation condition management DB 3005 (see FIG. 13) using the recommendation condition identification information as a search key to read corresponding use heading name, recommendation condition 1, transaction heading name, and recommendation condition 2. At this time, the extracting/specifying unit 32 extracts, for example, "business card copy" as the use heading name, "700 sheets ≥ period α" as the recommendation condition 1, "business card folder purchase" as the transaction heading name, and "200 items ≥ period α" as the recommendation condition 2.

Then, the extracting/specifying unit 32 extracts history information corresponding to the extracted recommendation condition among history information corresponding to the extracted customer identification information (step S81-5). Specifically, the extracting/specifying unit 32 searches the use history information management DB 3003 (see FIG. 11) and the transaction history information management DB 3004 (see FIG. 12) to read the history information corresponding to the customer identification information extracted in step S81-1. Further, the extracting/specifying unit 32 extracts history information corresponding to the use heading name and the transaction heading name of the recommendation condition extracted in step S81-4 among the extracted use history information and transaction history information. Specifically, the extracting/specifying unit 32 extracts history information indicating "business card copy" from history information corresponding to customer identification information "C0001" managed in the use history information management DB 3003. Also, the extracting/specifying unit 32 extracts history information indicating "business card folder purchase" from history information corresponding to the customer identification information "C0001" managed in the transaction history information management DB 3004. The extracting/specifying unit 32 may extract just history information of the user device 5 to which the introduction object has been introduced. In the introduction information management DB 3007, device identification information for identifying a user device 5 of an introduction destination is managed in association with each introduction object identification information. Thus, the extracting/specifying unit 32 can extract just history information associated with device identification information corresponding to device identification information managed in the introduction information management DB 3007 among use history information managed in the use history information management DB 3003.

Then, the calculation unit 36 aggregates history information before introduction of the introduction object (step S81-6). Specifically, the calculation unit 36 refers to the use history information management DB 3003 and the transaction history information management DB 3004 for history information in a predetermined period before the introduction date and time (or on or before the introduction date and time) managed in the introduction information management DB 3007 (see FIG. 15) among the history information extracted in step S81-5, aggregates the numbers of uses (the amounts of use), and calculates the total value. The extracting/specifying unit 32 specifies, for example, history information whose use heading name is "business card copy" and whose use date and time is included in the predetermined period with reference to the use history information management DB 3003. Then, the extracting/specifying unit 32 calculates the total value of the numbers of uses (the amounts of use) in cooperation with the calculation unit 36.

The predetermined period is, for example, a period that is shorter than the period used in the determination in step S81-2. In this case, the end point of the predetermined period is set by the calculation unit 36 to be on or before the introduction date and time of a predetermined introduction object. Moreover, the calculation unit 36 similarly specifies history information whose transaction heading name is "business card folder purchase" and whose transaction date and time is included in the predetermined period with reference to the transaction history information management DB 3004. Then, the extracting/specifying unit 32 calculates the total value of the numbers of transactions (the amounts of transaction) in cooperation with the calculation unit 36. At this time, the calculation unit 36 may calculate the total value for each divided period obtained by dividing the predetermined period into a plurality of divided periods, and arrange the divided periods in chronological order. In this case, the calculation unit 36 may set the predetermined period to be one month and the divided period to be one day, and calculate the daily amount of use for one month by summing the amount of use per day.

Then, the calculation unit 36 aggregates history information after the introduction of the introduction object (step S81-7). Specifically, the calculation unit 36 refers to the use history information management DB 3003 and the transaction history information management DB 3004 for history information in a predetermined period after the introduction date and time (or on or after the introduction date and time) managed in the introduction information management DB 3007 (see FIG. 15) among the history information extracted in step S81-5, aggregates the numbers of uses (the amounts of use), and calculates the total value. The extracting/specifying unit 32 specifies, for example, history information whose use heading name is "business card copy" and whose use date and time is included in the predetermined period with reference to the use history information management DB 3003. Then, the extracting/specifying unit 32 calculates the total value of the numbers of uses (the amounts of use) in cooperation with the calculation unit 36.

The predetermined period is, for example, a period that is shorter than the period used in the determination in step S81-2. In this case, the start point of the predetermined period is set by the calculation unit 36 to be on or after the introduction date and time of a predetermined introduction object. Moreover, the calculation unit 36 similarly specifies history information whose transaction heading name is "business card folder purchase" and whose transaction date and time is included in the predetermined period with reference to the transaction history information management DB 3004. Then, the extracting/specifying unit 32 calculates the total value of the numbers of transactions (the amounts of transaction) in cooperation with the calculation unit 36. At this time, the calculation unit 36 may calculate the total value for each divided period obtained by dividing the predetermined period into a plurality of divided periods, and arrange the divided periods in chronological order. In this case, the calculation unit 36 may set the predetermined period to be one month and the divided period to be one day, and calculate the daily amount of use for one month by summing the amount of use per day.

Then, the calculation unit 36 calculates the difference between the history information before the introduction of the introduction object and the history information after the introduction of the introduction object (step S81-8). Specifically, the calculation unit 36 calculates the difference between the total value of the history information before the introduction calculated in step S81-6 and the total value of the history information after the introduction calculated in step S81-7. The "difference" may be also referred to as an "amount of change". In this case, for example, the calculation unit 36 calculates the difference between the total value before the introduction and the total value after the introduction for the number of uses (the amount of use) of the use history whose use heading name is "business card copy", and further calculates the difference between the total value before the introduction and the total value after the introduction for the number of transactions (the amount of transaction) of the history information whose transaction heading name is "business card folder purchase".

In the above-described example, the difference between the history information before the introduction of the introduction object and the history information after the introduction of the introduction object is calculated; however, the difference to be calculated may be any index indicating a change in the number of uses (the amount of use) or the number of transactions (the amount of transaction) before and after the introduction of the introduction object. For example, the calculation unit 36 may calculate the ratio of the total value calculated in step S81-6 to the total value calculated in step S81-7 as the difference.

Accordingly, the calculation unit 36 recommends a predetermined introduction object to the communication terminal 4 or the user device 5, and as a result, can calculate difference information on the predetermined introduction object introduced to the communication terminal 4 or the user device 5. That is, an introduction effect in a predetermined period relating to the introduction object can be obtained based on the calculated difference information. The introduction effect may include, in addition to the difference information indicating the difference calculated in step S81-8, pre-introduction history information given in a predetermined period before introduction of an introduction object such as a service or a product, and post-introduction history information given in a predetermined period after the introduction of the introduction object. At this time, the pre-introduction history information may be history information in a predetermined period before the introduction of the introduction object, or may be the total value of history information before the introduction of the introduction object calculated in step S81-6. Similarly, the post-introduction history information may be history information in a predetermined period after the introduction of the introduction object, or may be the total value of history information after the introduction of the introduction object calculated in step S81-7.

Through the processing up to this point, the recommendation management apparatus 3 registers various items of information including the pre-introduction history information, the post-introduction history information, and the difference information in the storage unit 3000 and manages the information. The registration management unit 38 may manage a URL for making an access to various items of stored information in association with the customer identification information.

Then, the generation unit 37 generates notification information relating to the difference for notification to the user, and exits the flow (step S81-9). Specifically, the generation unit 37 generates information including the pre-introduction history information, the post-introduction history information, and the difference information. Accordingly, the user can be notified of the introduction effect obtained by introducing the introduction object. The generation unit 37 may generate difference information when the calculated difference is equal to or larger than a predetermined threshold value or is smaller than the predetermined threshold value.

### Generation of Difference Information Notification Screen Data

Referring back to FIG. 26, the generation unit 37 of the recommendation management apparatus 3 generates difference information notification screen data (step S82). Specifically, the generation unit 37 generates screen data to be displayed on the communication terminal 4 based on the information including the pre-introduction history information, the post-introduction history information, and the difference information generated in step S81-9. However, when the communication terminal 4 has installed the use application of the introduction object according to the present embodiment, it is sufficient to simply prepare the information including the pre-introduction history information, the post-introduction history information, and the difference information generated in step S81-9. The recommendation management apparatus 3 may store the difference information notification screen data generated in step S82 or the difference information generated in step S81 in association with the customer ID. Accordingly, when the recommendation management apparatus 3 is requested by the communication terminal 4 or the user device 5 to transmit a recommendation information notification, the recommendation management apparatus 3 can transmit the difference information notification screen based on the difference information notification screen data or the difference information generated in advance.

Then, the transmitting/receiving unit 31 transmits a difference information notification to the communication terminal 4 (step S83). For example, when the difference information calculation process is performed in response to a difference information notification request transmitted by the communication terminal 4 or the user device 5, the transmitting/receiving unit 31 transmits a difference information notification to the communication terminal 4 or the user device 5 that is the transmission source of the difference information notification request. The transmitting/receiving unit 31 may transmit the difference information notification based on address information managed in the device information management DB 3002 or an email address managed in the user information management DB 3001. In this case, the transmitting/receiving unit 31 may transmit the difference information notification to an email address of an administrative user among a plurality of email addresses managed in the user information management DB 3001 or to the user device 5 or the communication terminal 4 managed by the administrative user among a plurality of items of address information managed in the device information management DB 3002. Accordingly, the transmitting/receiving unit 41 of the communication terminal 4 receives the difference information notification transmitted by the recommendation management apparatus 3. The communication terminal 4 may acquire the recommendation information notification from an external server such as a mail server. At this time, the difference information notification includes, as difference information notification screen data relating to the introduction object, difference information, link information of an analysis page obtained by an analysis on an introduction effect, and the like. The transmission destination of the result display screen may be the user device 5.

Then, the display control unit 44 of the communication terminal 4 displays a difference information notification screen on the display 407 (step S84). Specifically, the display control unit 44 causes the display 407 to display the difference information notification screen generated based on the difference information notification screen data received in step S83. The communication terminal 4 may make an access to a Web page provided by the recommendation management apparatus 3 to display the difference information notification screen. For example, the recommendation management apparatus 3 performs the user authentication process in response to a user authentication request received from the communication terminal 4, and specifies the customer ID to which the authenticated user belongs. Then, a difference information notification screen relating to the specified customer ID is provided to the communication terminal 4. In this case, step S43 can be omitted.

When the user device 5 receives the difference information notification, banner displaying or pop-up displaying can be provided on the screen of the operation unit as displaying indicating that the difference information notification has been received. When the user operates the banner display portion or the pop-up display portion, the difference information notification screen is displayed in the user device 5. Displaying indicating that the difference information notification has been received or the difference information notification screen may be displayed when the user who has logged in to the user device 5 is an administrative user. In this case, an administrative user who manages a user device 5 can be set in advance per user device 5.

In the above-described example, the case where the introduction object is the application that is installed in the user device 5 or the communication terminal 4 has been described; however, it is not limited thereto. For example, when an introduction object is purchased or contracted, the calculation unit 36 can similarly calculate the difference between history information before the introduction and history information after the introduction due to the purchase or contract of the introduction object as the introduction effect, and the generation unit 37 can generate the difference information notification screen data.

### Example Display Screen

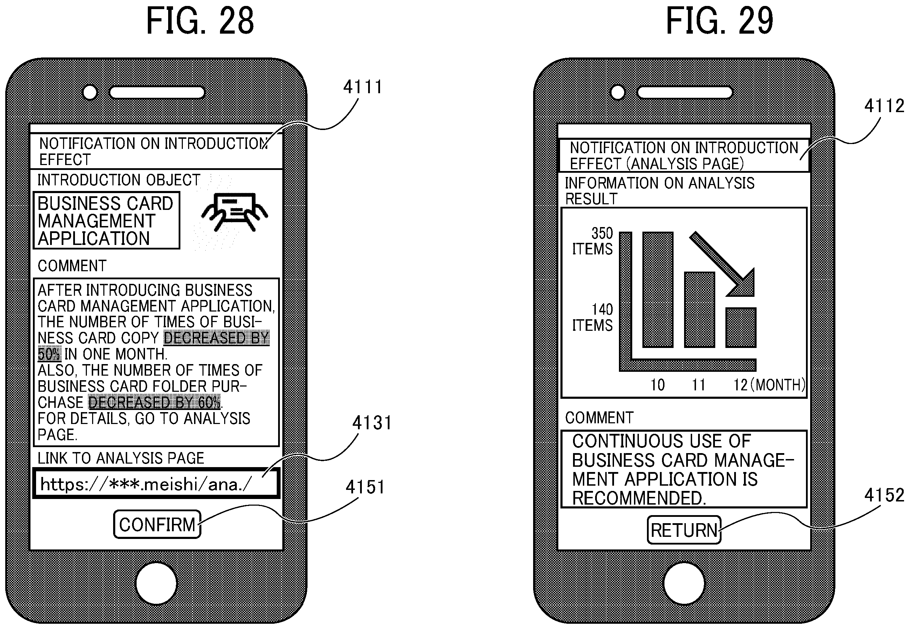

A display screen for notification of an introduction effect including difference information is described. FIG. 28 is a view illustrating an example display screen for notification of difference information. As illustrated in FIG. 28, the display control unit 44 controls the display 407 of the communication terminal 4 to display a result display screen 4111. On the result display screen 4111, the name of an introduction object (for example, business card management application) compatible with the user device 5 and extracted by the recommendation management apparatus 3, and a comment relating to the difference in history information calculated before and after introduction of the introduction object are displayed. For example, as the difference information, it is possible to display the difference between the total value before the introduction and the total value after the introduction for the number of uses (the amount of use) of the history information whose use heading name is "business card copy", and the difference between the total value before the introduction and the total value after the introduction for the number of transactions (the amount of transaction) of the history information whose transaction heading name is "business card folder purchase". On the result display screen 4111, a link display field 4131 indicating a link destination URL to an analysis page obtained by an analysis on an introduction effect is displayed. At this time, the link destination URL to the analysis page is information managed in the heading of the analysis result storage destination associated with the introduction object identification information of the introduction information management DB 3007 (see FIG. 15). Accordingly, the user can check the content of the result display screen 4111, perform a desirable operation on the link display field 4131 such as making an access to the analysis result storage destination URL, and then operate a confirmation button 4151 to confirm the details of the analysis result. The same applies to a case where the recommendation management apparatus 3 transmits a notification to each user device 5.

### Example Display Screen

A display screen for notification of an analysis result of an introduction effect is described next. FIG. 29 is a view illustrating an example display screen for notification of an analysis result for the difference information. As illustrated in FIG. 29, the display control unit 44 controls the display 407 of the communication terminal 4 to display an introduction effect analysis notification screen 4112. On the introduction effect analysis notification screen 4112, for example, regarding the introduction effect of the business card management application illustrated in FIG. 28, the display control unit 44 provides a notification of the difference in history information in a certain period together with the bar graph result in addition to the numerical value of the difference in history information. Further, on the introduction effect analysis notification screen 4112, the display control unit 44 displays a comment statement for the analysis result in a comment display field. Accordingly, the user can visually recognize the introduction effect of the recommended introduction object by checking the introduction effect analysis notification screen 4112, and an advantageous effect can be expected such that it is easier to determine whether the introduction of the introduced introduction object is continued. The user can make a transition to another screen by operating a return button 4152. The displaying of the introduction effect analysis notification screen 4112 is similar to that when the recommendation management apparatus 3 transmits an introduction effect analysis notification to each user device 5.

### Example Display Screen

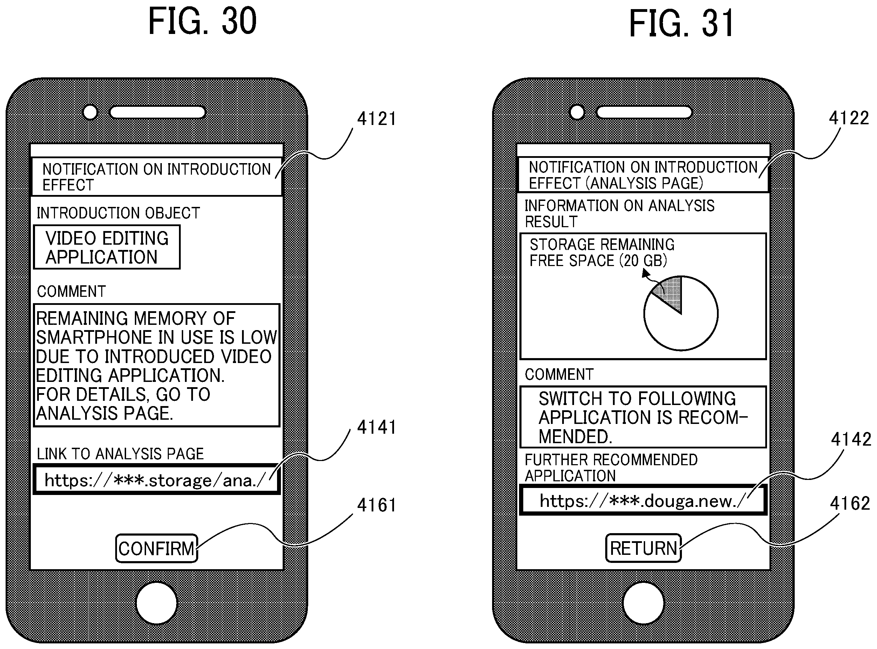

A display screen for notification of another introduction effect is described next. FIG. 30 is a view illustrating an example display screen for notification of another difference information. As illustrated in FIG. 30, the display control unit 44 controls the display 407 of the communication terminal 4 to display a result display screen 4121. On the result display screen 4121, the name of the introduction object (for example, video editing application) compatible with the user device 5 and extracted by the recommendation management apparatus 3, and a comment relating to the difference in history information calculated before and after the introduction of the introduction object are displayed. On the result display screen 4121, a link display field 4141 indicating a link destination URL to an analysis page obtained by an analysis on an introduction effect is displayed. At this time, the link destination URL to the analysis page is information managed in the heading of the analysis result storage destination associated with the introduction object identification information of the introduction information management DB 3007 (see FIG. 15). Accordingly, the user can check the content of the result display screen 4121, perform a desirable operation on the link display field 4141 such as making an access to the analysis result storage destination URL, and then operate a confirmation button 4161 to confirm the details of the analysis result. The same applies to a case where the recommendation management apparatus 3 transmits a notification to each user device 5.

### Example Display Screen

A display screen for notification of an analysis result of the other introduction effect is described next. FIG. 31 is a view illustrating an example display screen for notification of an analysis result for the other difference information. As illustrated in FIG. 31, the display control unit 44 controls the display 407 of the communication terminal 4 to display an introduction effect analysis notification screen 4122. On the introduction effect analysis notification screen 4122, for example, regarding the introduction effect of the business card management application illustrated in FIG. 30, the display control unit 44 provides a notification of the proportion of a specific element in the whole together with the circle graph result in addition to the numerical value indicating the difference in history information. Further, on the introduction effect analysis notification screen 4122, the display control unit 44 displays a comment statement for the analysis result in a comment display field. On the introduction effect analysis notification screen 4122, a link display field 4142 indicating a link destination URL to a recommended page is further displayed. Accordingly, the user makes an access to the link destination URL to a further recommended page to obtain a consideration opportunity for introduction of a further recommended introduction object. The user can make a transition to another screen by operating a return button 4162. The displaying of the introduction effect analysis notification screen 4112 is similar to that when the recommendation management apparatus 3 transmits an introduction effect analysis notification to each user device 5.

### Processing Using User Device According to Another Embodiment

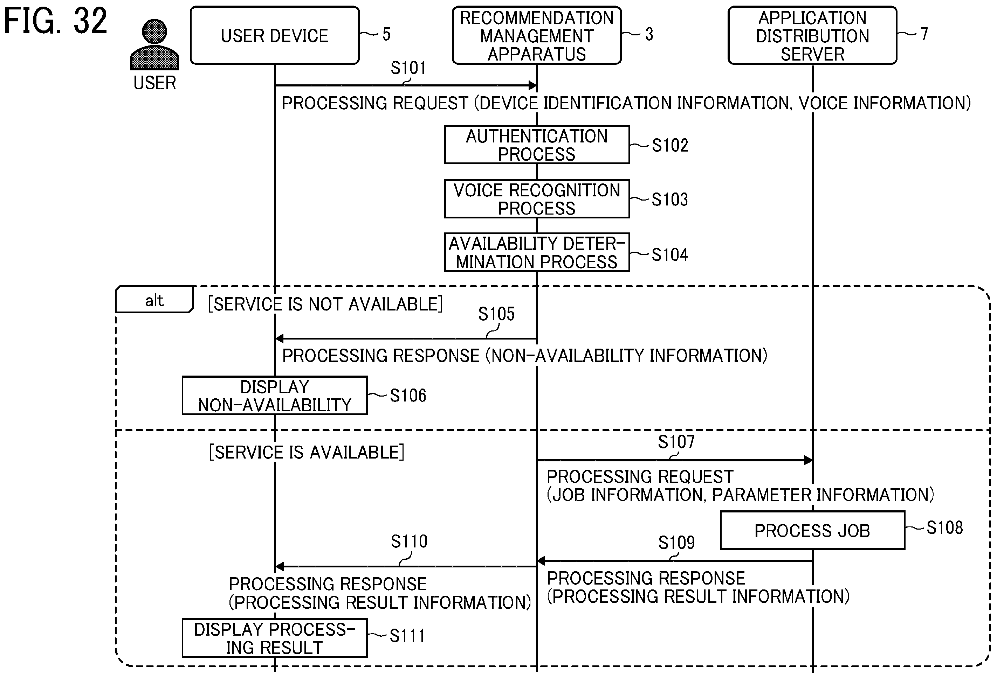

An example of processing using a user device 5 according to another embodiment is described here. FIG. 32 is a sequence diagram illustrating an example of processing using a user device 5 according to another embodiment. In the example illustrated in FIG. 32, a case where the user device 5 uses an interactive voice operation apparatus, for example, a smart speaker or an AI speaker (hereinafter, referred to as smart speaker) is described. An introduction object in this case is, for example, an application for the smart speaker to execute a predetermined function. The application includes a native application that executes a function by being installed in the smart speaker, and a Web application in which the smart speaker executes a function in cooperation with the application distribution server 7. An extension function for extending the function provided by the application distribution server 7, a program for extending the function, and so forth, may be referred to as an application. Thus, the introduction of the application that is an introduction object includes a sign-up for use of the application from the communication terminal 4 to the application distribution server 7.

In the case of FIG. 32, the transmitting/receiving unit 51 of the smart speaker serving as an example of the user device 5 transmits a processing request to the recommendation management apparatus 3 (step S101). Accordingly, the transmitting/receiving unit 31 of the recommendation management apparatus 3 receives the processing request transmitted by the smart speaker. At this time, the processing request includes device identification information for identifying the smart speaker and voice information input to the smart speaker.

Then, the determination processing unit 35 of the recommendation management apparatus 3 performs an authentication process (step S102). Specifically, the determination processing unit 35 compares the device identification information included in the voice information received in step S101 with the device identification information registered in the recommendation management apparatus 3 in advance. When matching device identification information has been registered as a result of the comparison, the recommendation management apparatus 3 determines that the authentication has been successful. At this time, the determination processing unit 35 specifies customer identification information corresponding to the device identification information.

Then, the determination processing unit 35 executes a voice recognition process based on the voice information (step S103), and then executes an availability determination process (step S104). Specifically, the determination processing unit 35 determines an available service based on a device permission DB associated with the device identification information or a customer permission DB corresponding to the customer identification information associated with the device identification information.

The recommendation management apparatus 3 may specify an available service based on contract identification information and service identification information associated with tenant identification information and group identification information that are separately specified. The determination processing unit 35 of the recommendation management apparatus 3 compares service identification information corresponding to service information specified from voice information uttered by the user with service identification information corresponding to the service specified as the available service. As a result of the comparison, the determination processing unit 35 determines that the service is available when the service identification information matches, and determines that the service is not available when the service identification information does not match.

When there is no available service (when the service is not available), the transmitting/receiving unit 31 of the recommendation management apparatus 3 transmits a processing response including non-availability information indicating that the service is not available to the smart speaker (step S105). Accordingly, the transmitting/receiving unit 51 of the smart speaker receives the processing response transmitted by the recommendation management apparatus 3.

Then, the display control unit 54 of the smart speaker causes the display unit of the smart speaker to display a content indicating that the service is not available (step S106).

In contrast, when there is any available service (when the service is available), the transmitting/receiving unit 31 of the recommendation management apparatus 3 transfers (transmits) a processing request for the smart speaker received in step S101 to the application distribution server 7 (step S107). Accordingly, the transmitting/receiving unit 71 of the application distribution server 7 receives the processing request transmitted by the recommendation management apparatus 3. At this time, the processing request includes job information serving as a processing object and parameter information relating to the job. Depending on the service information, the recommendation management apparatus 3 may execute processing based on the job information and the parameter information. In this case, specification of the application distribution server 7 and transmission of the processing request can be omitted.

Then, the execution unit 76 of the application distribution server 7 executes an authentication process based on the received processing request (step S108).

Then, the transmitting/receiving unit 71 transmits a processing response for the processing request received in step S107 to the recommendation management apparatus 3 (step S109). Accordingly, the transmitting/receiving unit 31 of the recommendation management apparatus 3 receives the processing response transmitted by the application distribution server 7. At this time, the processing response includes processing result information.

Then, the transmitting/receiving unit 31 of the recommendation management apparatus 3 transmits the processing response including the processing result information executed by the application distribution server 7 to the smart speaker (step S110). Accordingly, the transmitting/receiving unit 51 of the smart speaker receives the processing response transmitted by the recommendation management apparatus 3.

Then, the display control unit 54 of the smart speaker causes the processing result to be displayed (step S111). Specifically, the display control unit 54 causes the processing result information included in the received processing response to be displayed on a display unit or to be output in voice via a speaker. Through the processing described above, the user using the smart speaker can cause the application distribution server 7 to execute desirable processing and can check the result by displaying or voice.

In the recommendation management system 2 according to the present embodiment, for example, when the above-described processing in steps S107 and S109 is executed, another apparatus or the like may be present between the recommendation management apparatus 3 and the application distribution server 7. That is, information (data) transmitted or received between the recommendation management apparatus 3 and the application distribution server 7 may be transmitted or received once via another apparatus or the like. The above-described configuration can be applied even when another processing step is present between the recommendation management apparatus 3 and the application distribution server 7.

As described above, according to the present embodiment, a recommendation management apparatus 3 receives (S33) use history information including device identification information for identifying a user device 5, a type of device, information corresponding to a use history (heading 1), a use date and time (or period), and the number of uses (the amount of use) transmitted by the user device 5, receives (S37) transaction history information including user identification information, a type of history, information corresponding to a transaction history (heading 2), a transaction date and time (or period), and the number of transactions (the amount of transaction) transmitted by a history management server 6, and calculates (S81) a difference between a total value of history information (use history or transaction history) before introduction of an introduction object and a total value of history information (use history or transaction history) after the introduction of the introduction object. Accordingly, when the introduction object is introduced, the user can check the difference relating to the use history of the user device to which the introduction object has been introduced and the transaction history associated with the transaction or the like of the user.

According to the present embodiment, the recommendation management apparatus 3 transmits an analysis result obtained by an analysis on difference information obtained by a measurement on an introduction effect, to a communication terminal 4 or the user device 5. Accordingly, in addition to the above-described advantageous effect, the user can visually recognize the introduction effect of the introduction object, and can easily determine whether the introduction of the introduced introduction object is continued.

According to the present embodiment, the recommendation management apparatus 3 further transmits information on a further recommended introduction object as the analysis result obtained by the analysis on the difference information obtained by the measurement on the introduction effect to the communication terminal 4 or the user device 5. Accordingly, in addition to the above-described advantageous effect, the user makes an access to a link destination URL to a further recommended page to obtain a consideration opportunity for introduction of the further recommended introduction object.

### Supplement to Embodiments

Each of the functions of the above-described embodiments may be implemented by one or more processing circuits or circuitry. Examples of the "processing circuits or circuitry" in the specification include a programmed processor, as a processor that is mounted on an electronic circuit and that performs the functions through software. Examples of the "processing circuits or circuitry" also include devices such as an application specific integrated circuit (ASIC), a digital signal processor (DSP), a field programmable gate array (FPGA), a system on a chip (SOC), a graphics processing unit (GPU), and conventional circuit components designed to perform the above-described functions.

In the above-described embodiment, a system may be provided in which learning is performed by machine learning, artificial intelligence (AI), deep learning, or the like for calculation of the introduction effect relating to the introduced introduction object. Further, the recommendation management system 2 may provide a system that can notify the user of a comment statement when an analysis notification on the introduction effect is performed, by using a result obtained by learning the comment statement through machine learning, AI, deep learning, or the like.

The recommendation management apparatus, the recommendation management system, the recommendation management method, and the program according to the embodiments of the disclosure have been described. The disclosure is not limited to the embodiments described above, and modifications such as adding another embodiment, changing an embodiment, or deleting an embodiment may be made so long as such modifications can be made by a person skilled in the art, and any aspect that achieves the operations and advantageous effects of the disclosure is included in the scope of the disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A recommendation management apparatus (3) comprising:
management means (38) configured to manage a user device associated with customer identification information for identifying a customer, a user associated with the customer identification information, and introduction object identification information for identifying an introduction object introduced in association with the customer identification information;
first acquisition means (33) configured to acquire use history information relating to a use history of the user device;
second acquisition means (33) configured to acquire transaction history information relating to a transaction history of the user;
calculation means (36) configured to calculate difference information indicating a difference between pre-introduction history information for a predetermined period before introduction of the introduction object indicated in the introduction object identification information and post-introduction history information for a predetermined period after the introduction of the introduction object indicated in the introduction object identification information, based on the use history information and the transaction history information;
generation means (37) configured to generate difference information notification screen information including the calculated difference information; and
transmission means (31) configured to transmit the generated difference information notification screen information to a destination associated with the customer identification information.

2. The recommendation management apparatus (3) according to claim 1,
wherein the introduction of the introduction object is prompted to the customer when a predetermined recommendation condition for the use history and the transaction history is satisfied, and
wherein the calculation means (36) is configured to calculate the difference information using the post-introduction history information for the predetermined period after the introduction of the introduction object introduced after the introduction is prompted, and the pre-introduction history information.

3. The recommendation management apparatus (3) according to claim 1 or 2,
wherein the calculation means (36) is configured to calculate and set the predetermined period before the introduction and the predetermined period after the introduction mutually independently.

4. The recommendation management apparatus (3) according to any one of claims 1 to 3,
wherein the difference information notification screen information further includes analysis result storage destination information indicating a storage destination of an analysis result obtained by an analysis on the difference information.

5. The recommendation management apparatus (3) according to any one of claims 1 to 4,
wherein the transmission means (31) is configured to, after transmitting the difference information notification screen information, transmit alternative introduction object storage destination information indicating a storage destination of an alternative introduction object that serves as an alternative of the introduction object to a communication terminal or the user device.

6. The recommendation management apparatus (3) according to any one of claims 1 to 5,
wherein the transaction history information includes purchase history information relating to a purchase of the user device, contract history information relating to a contract of the user device, and research history information relating to a research on the user device.

7. The recommendation management apparatus (3) according to any one of claims 1 to 6,
wherein the user device includes at least one of a multifunction peripheral, a scanner, a facsimile apparatus, an electronic whiteboard, a projector, a personal computer (3), a smartphone, and an interactive voice operation apparatus.

8. A recommendation management method performed by a recommendation management apparatus that manages information relating to an introduction object introduced in association with customer identification information for identifying a customer, the method comprising:
managing (S24) a user device associated with the customer identification information, a user associated with the customer identification information, and introduction object identification information for identifying the introduction object introduced in association with the customer identification information;
acquiring (S33) use history information relating to a use history of the user device;
acquiring (S37) transaction history information relating to a transaction history of the user;
calculating (S81) difference information indicating a difference between pre-introduction history information for a predetermined period before introduction of the introduction object indicated in the introduction object identification information and post-introduction history information for a predetermined period after the introduction of the introduction object indicated in the introduction object identification information, based on the use history and the transaction history;
generating (S82) difference information notification screen information including the calculated difference information; and
transmitting (S83) the generated difference information notification screen information to a destination associated with the customer identification information.

9. Carrier means storing a program that causes a recommendation management apparatus that manages information relating to an introduction object introduced in association with customer identification information for identifying a customer to execute processing, the processing comprising:
managing (S24) a user device associated with the customer identification information, a user associated with the customer identification information, and introduction object identification information for identifying the introduction object introduced in association with the customer identification information;
acquiring (S33) use history information relating to a use history of the user device;
acquiring (S37) transaction history information relating to a transaction history of the user;
calculating (S81) difference information indicating a difference between pre-introduction history information for a predetermined period before introduction of the introduction object indicated in the introduction object identification information and post-introduction history information for a predetermined period after the introduction of the introduction object indicated in the introduction object identification information, based on the use history and the transaction history;
generating (S82) difference information notification screen information including the calculated difference information; and
transmitting (S83) the generated difference information notification screen information to a destination associated with the customer identification information.

## Patentansprüche

1. Empfehlungsverwaltungseinrichtung (3), umfassend:
Verwaltungsmittel (38), die so konfiguriert sind, dass sie eine Benutzervorrichtung, die Kundenidentifikationsinformationen zugeordnet ist, verwalten, zum Identifizieren eines Kunden, eines Benutzers, der den Kundenidentifikationsinformationen zugeordnet ist, und von Einführungsobjektidentifikationsinformationen, um ein Einführungsobjekt zu identifizieren, das in Verbindung mit den Kundenidentifikationsinformationen eingeführt wurde;
erste Erfassungsmittel (33), die so konfiguriert sind, dass sie Verlaufsinformationen in Bezug auf einen Nutzungsverlauf der Benutzervorrichtung erfassen;
zweite Erfassungsmittel (33), die so konfiguriert sind, dass sie Transaktionsverlaufsinformationen in Bezug auf einen Transaktionsverlauf des Benutzers erfassen;
Berechnungsmittel (36), die so konfiguriert sind, dass sie Differenzinformationen berechnen, die eine Differenz zwischen Verlaufsinformationen vor Einführung für einen vorbestimmten Zeitraum vor der Einführung des in den Identifikationsinformationen des Einführungsobjekts angegebenen Einführungsobjekts und Verlaufsinformationen nach Einführung für einen vorbestimmten Zeitraum nach der Einführung des in den Identifikationsinformationen des Einführungsobjekts angegebenen Einführungsobjekts basierend auf den Verlaufsinformationen und den Transaktionsverlaufsinformationen angeben;
Generierungsmittel (37), die so konfiguriert sind, dass sie Bildschirminformationen für Benachrichtigungen über Differenzinformationen generieren, die die berechneten Differenzinformationen einschließen; und
Übertragungsmittel (31), die so konfiguriert sind, dass sie die generierten Bildschirminformationen für Benachrichtigungen über Differenzinformationen an ein Ziel übermitteln, das den Kundenidentifikationsinformationen zugeordnet ist.

2. Empfehlungsverwaltungseinrichtung (3) nach Anspruch 1,
wobei die Einführung des Einführungsobjekts dem Kunden vorgeschlagen wird, wenn eine vorbestimmte Empfehlungsbedingung für dem Nutzungsverlauf und Transaktionsverlauf erfüllt ist, und
wobei die Berechnungsmittel (36) so konfiguriert sind, dass sie die Differenzinformationen unter Verwendung der Verlaufsinformationen nach Einführung für den vorbestimmten Zeitraum nach der Einführung des eingeführten Einführungsobjekts, nachdem die Einführung vorgeschlagen wurde, und den Verlaufsinformationen vor Einführung berechnet.

3. Empfehlungsverwaltungseinrichtung (3) nach Anspruch 1 oder 2,
wobei die Berechnungsmittel (36) so konfiguriert sind, dass sie den vorbestimmten Zeitraum vor der Einführung und den vorbestimmten Zeitraum nach der Einführung jeweils unabhängig voneinander berechnen und festlegen.

4. Empfehlungsverwaltungseinrichtung (3) nach einem der Ansprüche 1 bis 3,
wobei die Bildschirminformationen für Benachrichtigungen über Differenzinformationen weiter Zielinformationen für die Speicherung von Analyseergebnissen einschließen, die einen Speicherort eines Analyseergebnisses angeben, das von einer Analyse der Differenzinformationen erhalten wurde.

5. Empfehlungsverwaltungseinrichtung (3) nach einem der Ansprüche 1 bis 4,
wobei die Übertragungsmittel (31) so konfiguriert sind, dass sie nach Übertragen der Bildschirminformationen für Benachrichtigungen über Differenzinformationen alternative Zielinformationen für die Speicherung eines Einführungsobjekts übertragen, die einen Speicherort eines alternativen Einführungsobjekts angeben, das als Alternative zum Einführungsobjekt für ein Kommunikationsendgerät oder die Benutzervorrichtung dient.

6. Empfehlungsverwaltungseinrichtung (3) nach einem der Ansprüche 1 bis 5,
wobei die Transaktionsverlaufsinformationen Kaufverlaufsinformationen, die sich auf einen Kauf der Benutzervorrichtung beziehen, Vertragsverlaufsinformationen, die sich auf einen Vertrag der Benutzervorrichtung beziehen, und Rechercheverlaufsinformationen, die sich auf eine Recherche der Benutzervorrichtung beziehen, einschließen.

7. Empfehlungsverwaltungseinrichtung (3) nach einem der Ansprüche 1 bis 6,
wobei die Benutzervorrichtung mindestens eines von einem Multifunktionsperipheriegerät, einem Scanner, einer Faxeinrichtung, einem elektronisches Whiteboard, einem Projektor, einem Personal Computer (3), einem Smartphone und einer interaktives Sprachbedieneinrichtung einschließt.

8. Empfehlungsverwaltungsverfahren, das von einer Empfehlungsverwaltungseinrichtung durchgeführt wird und Informationen verwaltet, die sich auf ein Einführungsobjekt beziehen, das in Verbindung mit Kundenidentifikationsinformationen zur Identifizierung eines Kunden eingeführt wurde, wobei das Verfahren Folgendes umfasst:
Verwalten (S24) einer Benutzervorrichtung, die den Kundenidentifikationsinformationen zugeordnet ist, eines Benutzers, der den Kundenidentifikationsinformationen zugeordnet ist, und von Einführungsobjektidentifikationsinformationen zum Identifizieren des Einführungsobjekts, das in Verbindung mit den Kundenidentifikationsinformationen eingeführt wurde;
Erfassen (S33) von Nutzungsverlaufsinformationen, die sich auf einen Nutzungsverlauf der Benutzervorrichtung beziehen;
Erfassen (S37) von Transaktionsverlaufsinformationen, die sich auf einen Transaktionsverlauf des Benutzers beziehen;
Berechnen (S81) von Differenzinformationen, die eine Differenz zwischen Verlaufsinformationen vor Einführung für einen vorbestimmten Zeitraum vor der Einführung des in den Identifikationsinformationen des Einführungsobjekts angegebenen Einführungsobjekts und Verlaufsinformationen nach Einführung für einen vorbestimmten Zeitraum nach der Einführung des in den Identifikationsinformationen des Einführungsobjekts angegebenen Einführungsobjekts basierend auf dem Nutzungsverlauf und dem Transaktionsverlauf angeben;
Generierung (S82) von Bildschirminformationen für Benachrichtigungen über Differenzinformationen, die die berechneten Differenzinformationen einschließen; und
Übertragen (S83) der generierten Bildschirminformationen für Benachrichtigungen über Differenzinformationen an ein Ziel, das den Kundenidentifikationsinformationen zugeordnet ist.

9. Carrier bedeutet Speichern eines Programms, das bewirkt, dass eine Empfehlungsverwaltungseinrichtung, die Informationen verwaltet, die sich auf ein Einführungsobjekt beziehen, das in Verbindung mit Kundenidentifikationsinformationen zur Identifizierung eines Kunden eingeführt wurde, eine Verarbeitung durchführt, wobei die Verarbeitung Folgendes umfasst:
Verwalten (S24) einer Benutzervorrichtung, die den Kundenidentifikationsinformationen zugeordnet ist, eines Benutzers, der den Kundenidentifikationsinformationen zugeordnet ist, und von Einführungsobjektidentifikationsinformationen zum Identifizieren des Einführungsobjekts, das in Verbindung mit den Kundenidentifikationsinformationen eingeführt wurde;
Erfassen (S33) von Nutzungsverlaufsinformationen, die sich auf einen Nutzungsverlauf der Benutzervorrichtung beziehen;
Erfassen (S37) von Transaktionsverlaufsinformationen, die sich auf einen Transaktionsverlauf des Benutzers beziehen;
Berechnen (S81) von Differenzinformationen, die eine Differenz zwischen Verlaufsinformationen vor Einführung für einen vorbestimmten Zeitraum vor der Einführung des in den Identifikationsinformationen des Einführungsobjekts angegebenen Einführungsobjekts und Verlaufsinformationen nach Einführung für einen vorbestimmten Zeitraum nach der Einführung des in den Identifikationsinformationen des Einführungsobjekts angegebenen Einführungsobjekts basierend auf dem Nutzungsverlauf und dem Transaktionsverlauf angeben;
Generierung (S82) von Bildschirminformationen für Benachrichtigungen über Differenzinformationen, die die berechneten Differenzinformationen einschließen; und
Übertragen (S83) der generierten Bildschirminformationen für Benachrichtigungen über Differenzinformationen an ein Ziel, das den Kundenidentifikationsinformationen zugeordnet ist.

## Revendications

1. Appareil de gestion de recommandations (3) comprenant :
des moyens de gestion (38) configurés pour gérer un dispositif utilisateur associé à des informations d'identification de client permettant d'identifier un client, un utilisateur associé aux informations d'identification de client, et des informations d'identification d'objet d'installation permettant d'identifier un objet d'installation installé en association avec les informations d'identification de client ;
des premiers moyens d'acquisition (33) configurés pour acquérir des informations d'historique d'utilisation relatives à un historique d'utilisation du dispositif utilisateur ;
des seconds moyens d'acquisition (33) configurés pour acquérir des informations d'historique de transactions relatives à un historique de transactions de l'utilisateur ;
des moyens de calcul (36) configurés pour calculer des informations de différence indiquant une différence entre des informations d'historique pré-installation relatives à une période prédéterminée avant l'installation de l'objet d'installation indiqué dans les informations d'identification d'objet d'installation et des informations d'historique post-installation relatives à une période prédéterminée après l'installation de l'objet d'installation indiqué dans les informations d'identification d'objet d'installation, sur la base des informations d'historique d'utilisation et des informations d'historique de transactions ;
des moyens de génération (37) configurés pour générer des informations d'écran de notification des informations de différence incluant les informations de différence calculées ; et
des moyens de transmission (31) configurés pour transmettre les informations d'écran de notification des informations de différence générées à une destination associée aux informations d'identification de client.

2. Appareil de gestion de recommandations (3) selon la revendication 1,
dans lequel l'installation de l'objet d'installation est proposée au client lorsqu'une condition de recommandation prédéterminée relative à l'historique d'utilisation et à l'historique de transactions est satisfaite, et
dans lequel les moyens de calcul (36) sont configurés pour calculer les informations de différence à l'aide des informations d'historique post-installation relatives à la période prédéterminée après l'installation de l'objet d'installation installé après la proposition de l'installation, et des informations d'historique pré-installation.

3. Appareil de gestion de recommandations (3) selon la revendication 1 ou 2,
dans lequel les moyens de calcul (36) sont configurés pour calculer et définir la période prédéterminée avant l'installation et la période prédéterminée après l'installation d'une manière mutuellement indépendante.

4. Appareil de gestion de recommandations (3) selon l'une quelconque des revendications 1 à 3,
dans lequel les informations d'écran de notification des informations de différence incluent en outre des informations de destination de stockage d'un résultat d'analyse indiquant une destination de stockage d'un résultat d'analyse obtenu au moyen d'une analyse des informations de différence.

5. Appareil de gestion de recommandations (3) selon l'une quelconque des revendications 1 à 4,
dans lequel les moyens de transmission (31) sont configurés pour, après transmission des informations d'écran de notification des informations de différence, transmettre des informations de destination de stockage d'un autre objet d'installation indiquant une destination de stockage d'un autre objet d'installation qui sert d'alternative à l'objet d'installation à destination d'un terminal de communication ou du dispositif utilisateur.

6. Appareil de gestion de recommandations (3) selon l'une quelconque des revendications 1 à 5,
dans lequel les informations d'historique de transactions incluent des informations d'historique d'achat relatives à un achat du dispositif utilisateur, des informations d'historique de contrat relatives à un contrat du dispositif utilisateur, et des informations d'historique de recherche relatives à une recherche sur le dispositif utilisateur.

7. Appareil de gestion de recommandations (3) selon l'une quelconque des revendications 1 à 6,
dans lequel le dispositif utilisateur inclut au moins l'un parmi un périphérique multifonction, un scanneur, un télécopieur, un tableau blanc électronique, un projecteur, un ordinateur personnel (3), un smartphone et un appareil à commande vocale interactive.

8. Procédé de gestion de recommandations exécuté par un appareil de gestion de recommandations qui gère des informations relatives à un objet d'installation installé en association avec des informations d'identification de client permettant d'identifier un client, le procédé comprenant :
la gestion (S24) d'un dispositif utilisateur associé aux informations d'identification de client, à un utilisateur associé aux informations d'identification de client, et à des informations d'identification d'objet d'installation permettant d'identifier l'objet d'installation installé en association avec les informations d'identification de client ;
l'acquisition (S33) d'informations d'historique d'utilisation relatives à un historique d'utilisation du dispositif utilisateur ;
l'acquisition (S37) d'informations d'historique de transactions relatives à un historique de transactions de l'utilisateur ;
le calcul (S81) d'informations de différence indiquant une différence entre des informations d'historique pré-installation relatives à une période prédéterminée avant l'installation de l'objet d'installation indiqué dans les informations d'identification de l'objet d'installation et des informations d'historique post-installation relatives à une période prédéterminée après l'installation de l'objet d'installation indiqué dans les informations d'identification de l'objet d'installation, sur la base de l'historique d'utilisation et de l'historique de transactions ;
la génération (S82) d'informations d'écran de notification des informations de différence incluant les informations de différence calculées ; et
la transmission (S83) des informations d'écran de notification des informations de différence générées à une destination associée aux informations d'identification de client.

9. Moyens de support stockant un programme qui amène un appareil de gestion de recommandations, gérant des informations relatives à un objet d'installation installé en association avec des informations d'identification de client permettant d'identifier un client, à exécuter un traitement, le traitement comprenant :
la gestion (S24) d'un dispositif utilisateur associé aux informations d'identification de client, à un utilisateur associé aux informations d'identification de client, et à des informations d'identification d'objet d'installation permettant d'identifier l'objet d'installation installé en association avec les informations d'identification de client ;
l'acquisition (S33) d'informations d'historique d'utilisation relatives à un historique d'utilisation du dispositif utilisateur ;
l'acquisition (S37) d'informations d'historique de transactions relatives à un historique de transactions de l'utilisateur ;
le calcul (S81) d'informations de différence indiquant une différence entre des informations d'historique pré-installation relatives à une période prédéterminée avant l'installation de l'objet d'installation indiqué dans les informations d'identification de l'objet d'installation et des informations d'historique post-installation relatives à une période prédéterminée après l'installation de l'objet d'installation indiqué dans les informations d'identification de l'objet d'installation, sur la base de l'historique d'utilisation et de l'historique de transactions ;
la génération (S82) d'informations d'écran de notification des informations de différence incluant les informations de différence calculées ; et
la transmission (S83) des informations d'écran de notification des informations de différence générées à une destination associée aux informations d'identification de client.
